# EUROPÄISCHE PATENTANMELDUNG

(11) **EP 4 718 355 A1**
(43) Veröffentlichungstag der Anmeldung: **01.04.2026**
(21) Anmeldenummer: 25204452.4
(22) Anmeldetag: 24.09.2025
(51) Int. Cl.: G06Q 10/087, A47F 11/10

(54) **VERKAUFSREGAL UND VERKAUFSREGALSYSTEM MIT STEUERGERÄT MIT VIELZAHL AN SCHNITTSTELLEN**

(30) Priorität: 25.09.2024 LU 103389
(71) Anmelder: Umdasch Store Makers Leibnitz GmbH, 8430 Leibnitz (AT)
(72) Erfinder: Turan, Alparslan, 8010 Graz (AT); Krasser, Stefan, 8452 Großklein (AT); Zach, Johann, 8461 Ehrenhausen (AT)
(74) Vertreter: Hahner, Ralph

(57) **Zusammenfassung**

Die Erfindung betrifft ein Verkaufsregal mit einem Steuergerät, wobei das Verkaufsregal das Steuergerät lagert und wobei das Steuergerät aufweist: einen Stromversorgungsanschluss; eine Netzwerkschnittstelle; wenigstens eine erste Schnittstelle, eingerichtet zur Ansteuerung und elektrischen Versorgung einer Beleuchtungseinrichtung, und wenigstens eine zweite Schnittstelle, eingerichtet zur Ansteuerung und elektrischen Versorgung eines Sensors, einen Spannungswandler, welcher eingerichtet ist, eine Eingangsspannung, welche über ein Netzteil an dem Stromversorgungsanschluss anliegt, in Versorgungsspannungen für die wenigstens eine erste Schnittstelle und die wenigstens eine zweite Schnittstelle zu wandeln; wobei das Steuergerät eingerichtet ist, Steuerbefehle für eine Beleuchtungseinrichtung und einen Sensor über die Netzwerkschnittstelle von einem Server zu empfangen und die Beleuchtungseinrichtung über die wenigstens eine erste Schnittstelle und den Sensor über die wenigstens eine zweite Schnittstelle entsprechend anzusteuern sowie erfasste Daten und/oder Statusinformationen der Beleuchtungseinrichtung über die wenigstens eine erste Schnittstelle und des Sensors über die wenigstens eine zweite Schnittstelle einzulesen und über die Netzwerkschnittstelle an den Server zu übertragen. Des Weiteren betrifft die Erfindung ein Verkaufsregalsystem.

## Beschreibung

Die Erfindung betrifft ein Verkaufsregal mit einem Steuergerät, wobei das Verkaufsregal das Steuergerät lagert und wobei das Steuergerät einen Stromversorgungsanschluss, eine Netzwerkschnittstelle, wenigstens eine erste Schnittstelle, eingerichtet zur Ansteuerung und elektrischen Versorgung einer Beleuchtungseinrichtung, und wenigstens eine zweite Schnittstelle, eingerichtet zur Ansteuerung und elektrischen Versorgung eines Sensors und einen Spannungswandler, welcher eingerichtet ist, eine Eingangsspannung, welche über ein Netzteil an dem Stromversorgungsanschluss anliegt, in Versorgungsspannungen für die wenigstens eine erste Schnittstelle und die wenigstens eine zweite Schnittstelle zu wandeln, aufweist. Des Weiteren betrifft die Erfindung ein Verkaufsregalsystem mit wenigstens einem solchen Verkaufsregal.

Im Einzelhandel, insbesondere in Supermärkten, Drogeriemärkten und in Baumärkten, werden zu verkaufende Waren dem entsprechenden Kundenkreis in der Regel auf Regalen präsentiert. Zur Vereinfachung von Betriebsabläufen und zur Verbesserung des Einkauferlebnisses des Kundenkreises kommen vermehrt sogenannte "intelligente Regale" oder "Smart Shelves" zum Einsatz. Derartige Regale können Elektrik- und/oder Elektronikkomponenten, wie beispielsweise Beleuchtungseinrichtungen, die die zu präsentierende Ware, deren direkte Umgebung oder die direkte Umgebung des intelligenten Regals ausleuchten, Sensoren, die der Bestandsüberwachung oder der Überwachung der Umgebungsbedingungen des Regals dienen, oder digitale Anzeigen zur Darstellung warenbezogener Informationen umfassen.

Typischerweise sind die Beleuchtungen, Sensoren oder digitale Anzeigen derartiger intelligenter Regale direkt in das Regal integriert, was den Aufbau intelligenter Regale sehr komplex macht, andererseits aber auch wenig Flexibilität in Hinblick auf die Anpassung des Regals an die zu präsentierende Ware oder die zu präsentierenden Waren bietet. Ferner können je nach Hersteller und Modell intelligente Regale unterschiedliche Protokolle oder Formate verwenden, um Daten zu kommunizieren. Dies kann Probleme bei der Integration mit anderen Geräten oder Systemen verursachen.

Das Dokument DE 10 2016 134 956 A1 betrifft ein System zur Bestromung von Anzeigeeinrichtungen zur Anzeige von warenbezogenen Informationen umfassend einen länglichen Grundkörper und wenigstens eine Abschlusseinrichtung, wobei der Grundkörper einen Kanal zur Aufnahme der Anzeigeeinrichtungen aufweist, wobei der Grundkörper zwei Endabschnitte aufweist, wobei jeder Endabschnitt einen von zwei Kanal-Endabschnitten des Kanals aufweist, in dem die Anzeigeeinrichtungen aufnehmbar sind, wobei das System wenigstens zwei in dem Kanal angeordnete Stromleiter aufweist, wobei durch Aufnehmen der Anzeigeeinrichtungen in dem Kanal jeweils ein Stromversorgungskontakt jeder Anzeigeeinrichtung mit jeweils einem der Stromleiter kontaktierbar ist, wobei durch Verbinden der Abschlusseinrichtung mit dem Endabschnitt des Grundkörpers jeweils eine Versorgungsleitung der Abschlusseinrichtung mit den Stromleitern kontaktierbar ist. Ferner betrifft das Dokument DE 10 2016 134 956 A1 ein Warenpräsentationssystem und ein Verfahren.

Das Dokument US 2014/0224875 A1 betrifft ein Regalsystem mit Stromversorgung, umfassend: eine Stromschiene mit einem ersten Leiter und einem zweiten Leiter entlang einer Länge der Stromschiene; und einen Stecker mit einem Kopplungsmechanismus, der so konfiguriert ist, dass er den Stecker mit einer Regalhalterung koppelt; einen ersten Stift und einen zweiten Stift, die sich von einer Oberfläche des Steckers erstrecken, wobei der erste Stift und der zweite Stift so konfiguriert sind, dass sie den Stecker mit der Stromschiene verbinden, so dass der erste Stift den ersten Leiter und der zweite Stift den zweiten Leiter elektrisch kontaktiert; und einen Verbinder, der so konfiguriert ist, dass er eine elektrische Verbindung mit dem ersten Stift und dem zweiten Stift herstellt.

Es ist eine Aufgabe der Erfindung, ein verbessertes Verkaufsregal sowie ein zugehöriges Verkaufsregalsystem bereitzustellen. Insbesondere ist es eine Aufgabe der Erfindung, ein Verkaufsregal und zugehöriges Verkaufsregalsystem bereitzustellen, welches eine einfache Integration verschiedener funktioneller Komponenten ermöglicht und flexibel an die zu präsentierende Ware oder die zu präsentierenden Waren angepasst werden kann.

Diese Aufgabe wird durch die Lehre der unabhängigen Ansprüche gelöst. Vorteilhafte Ausgestaltungen werden in den Unteransprüchen beansprucht.

Ein erster Aspekt der Erfindung betrifft ein Verkaufsregal mit einem Steuergerät, wobei das Verkaufsregal das Steuergerät lagert und wobei das Steuergerät vorzugsweise aufweist: einen Stromversorgungsanschluss; eine Netzwerkschnittstelle; wenigstens eine erste Schnittstelle, eingerichtet zur Ansteuerung und elektrischen Versorgung einer Beleuchtungseinrichtung, und wenigstens eine zweite Schnittstelle, eingerichtet zur Ansteuerung und elektrischen Versorgung eines Sensors; und einen Spannungswandler, welcher eingerichtet ist, eine Eingangsspannung, welche über ein Netzteil an dem Stromversorgungsanschluss anliegt, in Versorgungsspannungen für die wenigstens eine erste Schnittstelle und die wenigstens eine zweite Schnittstelle zu wandeln; wobei das Steuergerät des Weiteren vorzugsweise eingerichtet ist, Steuerbefehle für eine Beleuchtungseinrichtung und einen Sensor über die Netzwerkschnittstelle von einem Server zu empfangen und die Beleuchtungseinrichtung über die wenigstens eine erste Schnittstelle und den Sensor über die wenigstens eine zweite Schnittstelle entsprechend anzusteuern sowie erfasste Daten und/oder Statusinformationen der Beleuchtungseinrichtung über die wenigstens eine erste Schnittstelle und des Sensors über die wenigstens eine zweite Schnittstelle einzulesen und über die Netzwerkschnittstelle an den Server zu übertragen.

Ein zweiter Aspekt der Erfindung betrifft ein Verkaufsregalsystem, aufweisend: einen Server; und wenigstens ein Verkaufsregal gemäß dem ersten Aspekt der Erfindung.

Ein Ansteuern im Sinne der vorliegenden Offenbarung umfasst vorzugsweise wenigstens ein Einschalten und Ausschalten bzw. Aktivieren und Deaktivieren. Weiter vorzugsweise umfasst ein Ansteuern ein Weitergeben von Steuerbefehlen.

Eine Schnittstelle im Sinne der vorliegenden Offenbarung ist vorzugsweise eine Verbindungsstelle zwischen zwei miteinander in Beziehung stehenden informationsverarbeitenden Systemen oder Systemkomponenten, über die der Austausch von Daten, Statusinformationen und/oder Steuerbefehlen erfolgt.

Eine Netzwerkschnittstelle im Sinne der vorliegenden Offenbarung ist vorzugsweise eine Schnittstelle, die den Zugang zu einem Computernetzwerk ermöglicht.

Ein A/D-Wandler im Sinne der Erfindung ist eingerichtet, ein analoges Eingangssignal in einen digitalen Datenstrom zu wandeln.

Unter einer Master/Slave-Architektur wird im Sinne der vorliegenden Offenbarung vorzugsweise verstanden, dass in einem System aus zwei oder mehr insbesondere gleichartigen Komponenten eine Komponente (der Master) die Kommunikation mit den anderen Komponenten (den Slaves) initiiert und Datenflüsse von dem Master zu den Slaves oder von den Slaves zu dem Master steuert und die Slaves die Anweisungen des Masters ausführen, wobei zwischen den Slaves keine Kommunikation stattfindet.

Die Erfindung beruht insbesondere auf dem Ansatz, dass das erfindungsgemäße Verkaufsregal im Wesentlichen wie ein gewöhnliches Verkaufsregal aufgebaut ist und durch das Steuergerät ausgewählte Elektrik- und/oder Elektronikkomponenten, wie Beleuchtungseinrichtungen und/oder Sensoren, gezielt in das Verkaufsregal integriert werden können.

Durch die gezielte Integration ausgewählter Elektrik- und/oder Elektronikkomponenten, wie Beleuchtungseinrichtungen und/oder Sensoren, kann das erfindungsgemäße Verkaufsregal flexibel an die zu präsentierende Ware oder die zu präsentierenden Waren angepasst werden. Darüber hinaus können mittels des Steuergeräts verschiedene sogenannte "smarte" Funktionen in dem Verkaufsregal integriert werden, beispielsweise ein Erfassen des Warenbestands, die Überwachung der durch einen Kunden gewählten Produkte, eine kundenspezifische Präsentation der Waren, etc.

Der Spannungswandler des Steuergeräts ermöglicht weiterhin eine Eingangsspannung, welche über ein Netzteil an dem Stromversorgungsanschluss des Steuergeräts anliegt, in Versorgungsspannungen für die wenigstens eine erste Schnittstelle und die wenigstens eine zweite Schnittstelle zu wandeln, sodass über Schnittstellen angeschlossene elektrische Verbraucher, insbesondere eine über die wenigstens eine erste Schnittstelle angeschlossene und somit in das Verkaufsregal integrierte Beleuchtungseinrichtung und ein über die wenigstens eine zweite Schnittstelle angeschlossener und somit in das Verkaufsregal integrierter Sensor, zentral über das Steuergerät mit Energie versorgt werden können. Dadurch wird eine übersichtliche Verkabelung von Beleuchtungseinrichtungen und/oder Sensoren und der Einsatz kürzerer Kabel ermöglicht, was den Aufbau des Verkaufsregals vereinfacht und für Kosteneinsparungen sorgt.

Weiterhin wird über die wenigstens eine erste Schnittstelle und die wenigstens eine zweite Schnittstelle des Steuergeräts des Verkaufsregals eine zentrale Ansteuerung einer über die wenigstens eine erste Schnittstelle angeschlossene und somit in das Verkaufsregal integrierte Beleuchtungseinrichtung und eines über die wenigstens eine zweite Schnittstelle angeschlossenen und somit in das Verkaufsregal integrierten Sensors ermöglicht. Ebenso wird über die wenigstens eine erste Schnittstelle und die wenigstens eine zweite Schnittstelle des Steuergeräts ein zentrales Einlesen und Zusammenführen erfasster Daten und/oder Statusinformationen einer über die wenigstens eine erste Schnittstelle angeschlossenen und somit in das Verkaufsregal integrierten Beleuchtungseinrichtung und eines über die wenigstens eine zweite Schnittstelle angeschlossenen und somit in das Verkaufsregal integrierten Sensors ermöglicht. Dies sorgt für eine erhebliche Reduzierung der Komplexität des Verkaufsregals bei gleichzeitig hoher Funktionalität.

Darüber hinaus erlaubt die Netzwerkschnittstelle des Steuergeräts des Verkaufsregals Steuerbefehle für eine über die wenigstens eine erste Schnittstelle angeschlossene und somit in das Verkaufsregal integrierte Beleuchtungseinrichtung und einen über die wenigstens eine zweite Schnittstelle angeschlossenen und somit in das Verkaufsregal integrierten Sensor von einem Server zu empfangen sowie erfasste Daten und/oder Statusinformationen einer über die wenigstens eine erste Schnittstelle angeschlossene und somit in das Verkaufsregal integrierte Beleuchtungseinrichtung und eines über die wenigstens eine zweite Schnittstelle angeschlossenen und somit in das Verkaufsregal integrierten Sensors über die Netzwerkschnittstelle an den Server zu übertragen. Dies hat den Vorteil, dass ein Nutzer, ohne sich in unmittelbare Nähe des Steuergeräts befinden zu müssen, Steuerbefehle für eine über die wenigstens eine erste Schnittstelle angeschlossene und somit in das Verkaufsregal integrierte Beleuchtungseinrichtung und/oder einen über die wenigstens eine zweite Schnittstelle angeschlossenen und somit in das Verkaufsregal integrierten Sensor über den Server und die Netzwerkschnittstelle an das Steuergerät senden kann, von wo aus die Steuerbefehle über die wenigstens eine erste Schnittstelle an die Beleuchtungseinrichtung und über die wenigstens eine zweite Schnittstelle an den Sensor weitergeleitet werden können. Ebenso hat dies den Vorteil, dass ein Nutzer, ohne sich in unmittelbare Nähe des Steuergeräts befinden zu müssen, erfasste Daten und/oder Statusinformationen einer über die wenigstens eine erste Schnittstelle angeschlossenen und somit in das Verkaufsregal integrierte Beleuchtungseinrichtung, die über die wenigstens eine erste Schnittstelle eingelesen wurden, und/oder eines über die wenigstens eine zweite Schnittstelle angeschlossenen und somit in das Verkaufsregal integrierten Sensors, die über die wenigstens eine zweite Schnittstelle eingelesen wurden, und über die Netzwerkschnittstelle and den Server übertragen wurden, vom Server abzurufen.

Das Vorhandensein von wenigstens einer ersten Schnittstelle, eingerichtet zur Ansteuerung und elektrischen Versorgung einer Beleuchtungseinrichtung, ermöglicht die Integration wenigstens einer Beleuchtungseinrichtung in das Verkaufsregal, die die zu präsentierende Ware, deren direkte Umgebung oder die direkte Umgebung des Verkaufsregals ausleuchten kann. Über die wenigstens eine erste Schnittstelle kann die wenigstens eine Beleuchtungseinrichtung mit Energie versorgt werden. Ferner ist über die wenigstens eine erste Schnittstelle ein Einschalten und ein Ausschalten der wenigstens einen Beleuchtungseinrichtung möglich, was eine effiziente Beleuchtung des Verkaufsregals, insbesondere der zu präsentierenden Ware, oder der Umgebung des Verkaufsregal ermöglicht, was Energie und Kosten spart.

Das Vorhandensein von wenigstens einer zweiten Schnittstelle, eingerichtet zur Ansteuerung und elektrischen Versorgung eines Sensors, ermöglicht die Integration wenigstens eines Sensors in das Verkaufsregal, der die Umgebungsbedingungen des Verkaufsregals erfasst. Über die wenigstens eine zweite Schnittstelle kann der wenigstens eine Sensor mit Energie versorgt werden. Es wird eine Überwachung des Verkaufsregals, insbesondere eine Detektion von Abweichungen von warenspezifischen Soll-Werten bestimmter Umgebungsparameter, ermöglicht.

In einer vorteilhaften Ausgestaltung des Verkaufsregals gemäß dem ersten Aspekt der Erfindung weist das Verkaufsregal des Weiteren wenigstens eine Beleuchtungseinrichtung und/oder wenigstens einen Sensor auf.

Vorzugsweise weist das Verkaufsregal mehrere Sensoren auf, die unterschiedliche Umgebungsparameter des Verkaufsregals messen.

In einer weiteren vorteilhaften Ausgestaltung des Verkaufsregals gemäß dem ersten Aspekt der Erfindung weist das Steuergerät des Weiteren auf: wenigstens eine dritte Schnittstelle, eingerichtet zur Ansteuerung und elektrischen Versorgung einer digitalen Beschilderung, wobei der Spannungswandler des Weiteren eingerichtet ist, eine Eingangsspannung, welche über ein Netzteil an dem Steuergerät anliegt, in eine Versorgungsspannung für die wenigstens eine dritte Schnittstelle zu wandeln, und wobei das Steuergerät des Weiteren eingerichtet ist, Steuerbefehle für eine digitale Beschilderung über die Netzwerkschnittstelle von einem Server zu empfangen und die digitale Beschilderung über die wenigstens eine dritte Schnittstelle entsprechend anzusteuern sowie erfasste Daten und/oder Statusinformationen der digitalen Beschilderung über die wenigstens eine dritte Schnittstelle einzulesen und über die Netzwerkschnittstelle an den Server zu übertragen.

Der Spannungswandler des Steuergeräts ermöglicht somit eine Eingangsspannung, welche über ein Netzteil an dem Steuergerät anliegt, in Versorgungsspannungen für die wenigstens eine erste Schnittstelle, die wenigstens eine zweite Schnittstelle und die wenigstens eine dritte Schnittstelle zu wandeln, sodass eine über die Schnittstellen angeschlossenen elektrischen Verbraucher, insbesondere die wenigstens eine erste Schnittstelle angeschlossenen und somit in das Verkaufsregal integrierte Beleuchtungseinrichtung, ein über die wenigstens eine zweite Schnittstelle angeschlossener und somit in das Verkaufsregal integrierter Sensor und/oder eine über die wenigstens eine dritte Schnittstelle angeschlossene und somit in das Verkaufsregal integrierte digitale Beschilderung, zentral über das Steuergerät mit Energie versorgt werden können. Dadurch wird eine simple Verkabelung von Beleuchtungseinrichtungen, Sensoren und digitalen Beschilderungen und der Einsatz kürzerer Kabel ermöglicht, was den Aufbau des Verkaufsregals vereinfacht und für Kosteneinsparungen sorgt.

Über die wenigstens eine erste Schnittstelle, die wenigstens eine zweite Schnittstelle und die wenigstens eine dritte Schnittstelle des Steuergeräts des Verkaufsregals wird eine zentrale Ansteuerung einer über die wenigstens eine erste Schnittstelle angeschlossenen und somit in das Verkaufsregal integrierten Beleuchtungseinrichtung, eines über die wenigstens eine zweite Schnittstelle angeschlossenen und somit in das Verkaufsregal integrierten Sensors und einer über die wenigstens eine dritte Schnittstelle angeschlossenen und somit in das Verkaufsregal integrierten digitalen Beschilderung ermöglicht. Ebenso wird über die wenigstens eine erste Schnittstelle, die wenigstens eine zweite Schnittstelle und die wenigstens eine dritte Schnittstelle des Steuergeräts ein zentrales Einlesen und Zusammenführen erfasster Daten und/oder Statusinformationen einer über die wenigstens eine erste Schnittstelle angeschlossenen und somit in das Verkaufsregal integrierten Beleuchtungseinrichtung, eines über die wenigstens eine zweite Schnittstelle angeschlossenen und somit in das Verkaufsregal integrierten Sensors und einer über die wenigstens eine dritte Schnittstelle abgeschlossenen und somit in das Verkaufsregal integrierten digitalen Beschilderung ermöglicht. Dies sorgt für eine erhebliche Reduzierung der Komplexität des Verkaufsregals bei gleichzeitig hoher Funktionalität.

Vorzugsweise sind unterschiedliche Schnittstellen, insbesondere alle Schnittstellen, dazu eingerichtet, verschiedene Elektrik- und/oder Elektronikkomponenten anzusteuern und mit Energie zu versorgen. Weiter vorzugsweise ist wenigstens eine Schnittstelle der unterschiedlichen Schnittstellen eingerichtet, ausschließlich eine einzige spezifische Elektrik- und/oder Elektronikkomponente anzusteuern und mit Energie zu versorgen. Weiter vorzugsweise ist wenigstens eine Schnittstelle der unterschiedlichen Schnittstellen eingerichtet, verschiedene Elektrik- und/oder Elektronikkomponenten anzusteuern und wenigstens eine Schnittstelle der unterschiedlichen Schnittstellen eingerichtet, ausschließlich eine einzige spezifische Elektrik- und/oder Elektronikkomponente anzusteuern und mit Energie zu versorgen.

Somit erlaubt die Netzwerkschnittstelle des Steuergeräts des Verkaufsregals Steuerbefehle für eine über die wenigstens eine erste Schnittstelle angeschlossenen und somit in das Verkaufsregal integrierte Beleuchtungseinrichtung, einen über die wenigstens eine zweite Schnittstelle angeschlossenen und somit in das Verkaufsregal integrierten Sensor und eine über die wenigstens eine dritte Schnittstelle angeschlossenen und somit in das Verkaufsregal integrierte digitale Beschilderung von einem Server zu empfangen sowie erfasste Daten und/oder Statusinformationen einer über die wenigstens eine erste Schnittstelle angeschlossenen und somit in das Verkaufsregal integrierten Beleuchtungseinrichtung, eines über die wenigstens eine zweite Schnittstelle angeschlossenen und somit in das Verkaufsregal integrierten Sensors und einer über die wenigstens eine dritte Schnittstelle angeschlossenen und somit in das Verkaufsregal integrierten digitalen Beschilderung über die Netzwerkschnittstelle an den Server zu übertragen. Dies hat den Vorteil, dass ein Nutzer, ohne sich in unmittelbare Nähe des Steuergeräts befinden zu müssen, Steuerbefehle für eine über die wenigstens eine erste Schnittstelle angeschlossenen und somit in das Verkaufsregal integrierte Beleuchtungseinrichtung und/oder einen über die wenigstens eine zweite Schnittstelle angeschlossenen und somit in das Verkaufsregal integrierten Sensor und/oder einer über die wenigstens eine dritte Schnittstelle angeschlossenen und somit in das Verkaufsregal integrierten digitalen Beschilderung über den Server und die Netzwerkschnittstelle an das Steuergerät senden kann, von wo aus die Steuerbefehle über die wenigstens eine erste Schnittstelle an die Beleuchtungseinrichtung, über die wenigstens eine zweite Schnittstelle an den Sensor und über die wenigstens eine dritte Schnittstelle an die digitale Beschilderung weitergeleitet werden können. Ebenso hat dies den Vorteil, dass ein Nutzer, ohne sich in unmittelbare Nähe des Steuergeräts befinden zu müssen, erfasste Daten und/oder Statusinformationen einer über die wenigstens eine erste Schnittstelle angeschlossenen und somit in das Verkaufsregal integrierten Beleuchtungseinrichtung, die über die wenigstens eine erste Schnittstelle eingelesen wurden, und/oder eines über die wenigstens eine zweite Schnittstelle angeschlossenen und somit in das Verkaufsregal integrierten Sensors, die über die wenigstens eine zweite Schnittstelle eingelesen wurden, und/oder einer über die wenigstens eine dritte Schnittstelle angeschlossenen und somit in das Verkaufsregal integrierten digitalen Beschilderung, die über die wenigstens eine dritte Schnittstelle eingelesen wurden, und über die Netzwerkschnittstelle and den Server übertragen wurden, vom Server abzurufen.

Das Vorhandensein von wenigstens einer dritten Schnittstelle, eingerichtet zur Ansteuerung und elektrischen Versorgung einer digitalen Beschilderung, ermöglicht die Integration wenigstens einer digitalen Beschilderung in das Verkaufsregal. Über die wenigstens eine dritte Schnittstelle kann die wenigstens eine digitale Beschilderung mit Energie versorgt werden. Die wenigstens eine digitale Beschilderung ermöglicht die Darstellung warenbezogener Informationen, wie beispielsweise Sonderangebote oder Produktvideos.

Vorzugsweise ist die wenigstens eine Schnittstelle für die wenigstens eine digitale Beschilderung eine Schnittstelle für asynchrone serielle Datenübertragung, insbesondere RS-485.

In einer weiteren vorteilhaften Ausgestaltung des Verkaufsregals gemäß dem ersten Aspekt der Erfindung weist das Verkaufsregal des Weiteren wenigstens eine Beleuchtungseinrichtung und/oder wenigstens einen Sensor und/oder wenigstens eine digitale Beschilderung auf.

In einer weiteren vorteilhaften Ausgestaltung des Verkaufsregals gemäß dem ersten Aspekt der Erfindung weist das Steuergerät des Weiteren auf: wenigstens eine vierte Schnittstelle, eingerichtet zur elektrischen Versorgung digitaler Preisschilder, insbesondere über eine Stromschiene, auf welcher die digitalen Preisschilder montiert sind, wobei der Spannungswandler des Weiteren eingerichtet ist, eine Eingangsspannung, welche über ein Netzteil an dem Steuergerät anliegt, in eine Versorgungsspannung für die wenigstens eine vierte Schnittstelle zu wandeln.

Der Spannungswandler des Steuergeräts ermöglicht somit eine Eingangsspannung, welche über ein Netzteil an dem Steuergerät anliegt, in Versorgungsspannungen für die wenigstens eine erste Schnittstelle, die wenigstens eine zweite Schnittstelle, die wenigstens eine dritte Schnittstelle und die wenigstens eine vierte Schnittstelle zu wandeln, sodass eine über die wenigstens eine erste Schnittstelle angeschlossene und somit in das Verkaufsregal integrierte Beleuchtungseinrichtung, ein über die wenigstens eine zweite Schnittstelle angeschlossener und somit in das Verkaufsregal integrierter Sensor, eine über die wenigstens eine dritte Schnittstelle angeschlossene und somit in das Verkaufsregal integrierte digitale Beschilderung und über die wenigstens eine vierte Schnittstelle angeschlossene und somit in das Verkaufsregal integrierte digitale Preisschilder zentral über das Steuergerät mit Energie versorgt werden können. Dadurch wird eine simple Verkabelung von Beleuchtungseinrichtungen, Sensoren, digitalen Beschilderungen und digitalen Preisschildern und der Einsatz kürzerer Kabel ermöglicht, was den Aufbau des Verkaufsregals vereinfacht und für Kosteneinsparungen sorgt.

Durch die elektrische Versorgung der digitalen Preisschilder über die wenigstens eine vierte Schnittstelle des Steuergeräts anstelle von, wie üblich, in den digitalen Preisschildern integrierten Batterien ist eine besonders nachhaltige Nutzung von digitalen Preisschildern möglich.

In einer weiteren vorteilhaften Ausgestaltung des Verkaufsregals gemäß dem ersten Aspekt der Erfindung weist das Verkaufsregal des Weiteren wenigstens eine Beleuchtungseinrichtung und/oder wenigstens einen Sensor und/oder wenigstens eine digitale Beschilderung und/oder digitale Preisschilder, sowie vorzugsweise eine Stromschiene, auf welcher die digitalen Preisschilder montiert sind, auf.

In einer weiteren vorteilhaften Ausgestaltung des Verkaufsregals gemäß dem ersten Aspekt der Erfindung weist das Steuergerät des Weiteren wenigstens eine Open-Schnittstelle auf, welche programmierbar ist, wobei der Spannungswandler des Weiteren eingerichtet ist, eine Eingangsspannung, welche über ein Netzteil an dem Steuergerät anliegt, in eine Versorgungsspannung für die wenigstens eine Open-Schnittstelle zu wandeln.

Die wenigstens eine Open-Schnittstelle kann individuell programmiert werden, was eine Integration weiterer Elektrik- und/oder Elektronikkomponenten in das Verkaufsregal und somit eine Realisierung ganz individueller Verkaufsregale ermöglicht.

Der Spannungswandler des Steuergeräts ermöglicht somit eine Eingangsspannung, welche über ein Netzteil an dem Steuergerät anliegt, in Versorgungsspannungen für die wenigstens eine erste Schnittstelle, die wenigstens eine zweite Schnittstelle, die wenigstens eine dritte Schnittstelle, die wenigstens eine vierte Schnittstelle und die wenigstens eine Open-Schnittstelle zu wandeln, sodass eine über die wenigstens eine erste Schnittstelle angeschlossenen und somit in das Verkaufsregal integrierte Beleuchtungseinrichtung, ein über die wenigstens eine zweite Schnittstelle angeschlossener und somit in das Verkaufsregal integrierter Sensor, eine über die wenigstens eine dritte Schnittstelle angeschlossene und somit in das Verkaufsregal integrierte digital Beschilderung, über die wenigstens eine vierte Schnittstelle angeschlossenen und somit in das Verkaufsregal integrierte digitale Preisschilder und eine über die wenigstens eine Open-Schnittstelle angeschlossene und somit in das Verkaufsregal integrierte weitere Elektrik- und/oder Elektronikkomponente zentral über das Steuergerät mit Energie versorgt werden können. Dadurch wird eine simple Verkabelung von Beleuchtungseinrichtungen, Sensoren, digitalen Beschilderungen, digitalen Preisschildern und weiteren Elektrik- und/oder Elektronikkomponenten und der Einsatz kürzerer Kabel ermöglicht, was den Aufbau des Verkaufsregals vereinfacht und für Kosteneinsparungen sorgt.

In einer weiteren vorteilhaften Ausgestaltung des Verkaufsregals gemäß dem ersten Aspekt der Erfindung ist der Spannungswandler bei einer Eingangsspannung von 24V eingerichtet, Versorgungsspannungen von 24V, 12V, 9V und 5V bereitzustellen.

Dies ermöglicht die Versorgung einer über die wenigstens eine erste Schnittstelle angeschlossenen und somit in das Verkaufsregal integrierten Beleuchtungseinrichtung und/oder eines über die wenigstens eine zweite Schnittstelle angeschlossenen und somit in das Verkaufsregal integrierten Sensors und/oder einer über die wenigstens eine dritte Schnittstelle angeschlossenen und somit in das Verkaufsregal integrierten digitalen Beschilderung und/oder über die wenigstens eine vierte Schnittstelle angeschlossener und somit in das Verkaufsregal integrierter digitaler Preisschilder und/oder einer über die wenigstens eine Open-Schnittstelle angeschlossenen und somit in das Verkaufsregal integrierten weiteren Elektrik- und/oder Elektronikkomponente mit einer jeweils erforderlichen Spannung.

Vorzugsweise ist der Spannungswandler bei einer Eingangsspannung von 24V des Weiteren eingerichtet, zusätzlich eine Versorgungsspannung von 3,3V bereitzustellen.

In einer weiteren vorteilhaften Ausgestaltung des Verkaufsregals gemäß dem ersten Aspekt der Erfindung ist die wenigstens eine zweite Schnittstelle eingerichtet zur Ansteuerung und elektrischen Versorgung eines Sensors aus der nachfolgenden Gruppe an Sensoren: Gewichtssensor, insbesondere eine Wiegezelle, Neigungssensor, Temperatursensor, Feuchtigkeitssensor, oder optischen Sensor, insbesondere eine Kamera.

In einer weiteren vorteilhaften Ausgestaltung des Verkaufsregals gemäß dem ersten Aspekt der Erfindung weist das Verkaufsregal des Weiteren einen Gewichtssensor, insbesondere eine Wiegezelle und/oder einen Neigungssensor und/oder einen Temperatursensor und/oder einen Feuchtigkeitssensor und/oder einen optischen Sensor, insbesondere eine Kamera, auf.

Dadurch wird eine Überwachung des Verkaufsregals, insbesondere eine Detektion von Abweichungen von warenspezifischen Soll-Werten bestimmter Umgebungsparameter, ermöglicht.

Ein Gewichtssensor, insbesondere eine Wiegezelle, ermöglicht ein Über- oder Unterschreiten eines Soll-Gewichts und somit insbesondere die Anwesenheit oder Abwesenheit einer Ware oder mehrerer Waren zu detektieren und kann somit zur Bestandserkennung und Bestandsüberwachung eingesetzt werden. Des Weiteren wird durch einen Gewichtssensor, insbesondere durch eine Wiegezelle, die Überwachung einer etwaigen Überladung des Verkaufsregals ermöglicht.

Ein Neigungssensor ermöglicht ein Überschreiten einer Soll-Neigung zu detektieren und somit die Überwachung einer etwaigen Überladung des Verkaufsregals.

Ein Temperatursensor ermöglicht eine Überwachung des Verkaufsregals, insbesondere eine Detektion von Abweichungen von warenspezifischen Soll-Temperaturen.

Ein Feuchtigkeitssensor ermöglicht eine Überwachung des Verkaufsregals, insbesondere eine Detektion von Abweichungen von warenspezifischen Soll-Feuchtigkeitswerten.

Ein optischer Sensor, insbesondere eine Kamera, ermöglicht die Anwesenheit oder Abwesenheit einer Ware oder mehrerer Waren zu detektieren und kann somit zur Bestandserkennung und Bestandsüberwachung eingesetzt werden.

Vorzugsweise ist die wenigstens eine Schnittstelle für den wenigstens einen Temperatursensor eine serielle Schnittstelle, insbesondere 1-Wire.

Vorzugsweise ist die wenigstens eine Schnittstelle für den wenigstens einen Feuchtigkeitssensor eine serielle Schnittstelle, insbesondere 1-Wire.

Vorzugsweise ist die wenigstens eine Schnittstelle für den wenigstens einen optischen Sensor eine Schnittstelle für synchrone serielle Datenübertragung, insbesondere SPI.

In einer weiteren vorteilhaften Ausgestaltung des Verkaufsregals gemäß dem ersten Aspekt der Erfindung weist das Steuergerät des Weiteren einen A/D-Wandler auf, um analoge Messsignale wenigstens eines Sensors, insbesondere eines Gewichtssensors, in digitale Messsignale wandeln zu können.

Dadurch können analoge Messsignale wenigstens eines Sensors, insbesondere eines Gewichtssensors, in digitale Messsignale gewandelt werden, die dann weiterverarbeitet, insbesondere über die Netzwerkschnittstelle an den Server weitergeleitet werden, und dort abgespeichert werden können.

In einer weiteren vorteilhaften Ausgestaltung des Verkaufsregals gemäß dem ersten Aspekt der Erfindung ist das Steuergerät lösbar, insbesondere magnetisch, an dem Verkaufsregal angebracht, insbesondere befestigt.

Dies ermöglicht eine einfache und schnelle Montage des Steuergeräts an dem Verkaufsregal sowie eine einfache und schnelle Demontage des Steuergeräts von dem Verkaufsregal.

In einer weiteren vorteilhaften Ausgestaltung des Verkaufsregals gemäß dem ersten Aspekt der Erfindung weist das Verkaufsregal des Weiteren auf: einen Regalsteher; wenigstens einen Warenträger; einen Befestigungsmechanismus, welcher dazu eingerichtet ist, den wenigstens einen Warenträger an dem Regalsteher zu befestigen, wobei das Steuergerät an der Unterseite des wenigstens einen Warenträgers angebracht, insbesondere befestigt, ist.

Vorzugsweise hat das Verkaufsregal einen modularen Aufbau, wobei die einzelnen Bestandteile des Verkaufsregals austauschbar und individuell anpassbar sind.

Der Befestigungsmechanismus ermöglicht eine einfache Befestigung des wenigstens einen Warenträgers an dem Regalsteher.

Das Anbringen, insbesondere Befestigen, des Steuergeräts an der Unterseite des wenigstens einen Warenträgers ermöglicht eine platzsparende Unterbringung des Steuergeräts im Verkaufsregal. Zudem kann gewährleistet werden, dass das Steuergerät nicht sichtbar in das Verkaufsregal angebracht, insbesondere befestigt, werden kann.

In einer weiteren vorteilhaften Ausgestaltung des Verkaufsregals gemäß dem ersten Aspekt der Erfindung ist in den Regalsteher eine Stromversorgung integriert, wobei der wenigstens eine Warenträger einen elektrischen Abnehmer aufweist, welcher in dem Befestigungsmechanismus integriert und eingerichtet ist, das Steuergerät mit Energie zu versorgen, wenn der wenigstens eine Warenträger über den Befestigungsmechanismus an dem Regalsteher befestigt ist, und wobei der Stromversorgungsanschluss zur elektrischen Verbindung mit dem elektrischen Abnehmer vorzugsweise eine elektrische Steckverbindung aufweist.

Dies ermöglicht, dass das Steuergerät, welches an der Unterseite des wenigstens einen Warenträgers angebracht, insbesondere befestigt, ist, durch Befestigen des wenigstens einen Warenträgers über den Befestigungsmechanismus am Regalsteher mit Strom versorgt wird und das Steuergerät, wenn der wenigstens einen Warenträger vom Regalsteher entfernt wird, stromlos ist.

Die elektrische Steckverbindung des Stromversorgungsanschlusses des Steuergeräts ermöglicht es, das Steuergerät einfach und schnell lösbar, insbesondere magnetisch, an dem Verkaufsregal anzubringen, insbesondere zu befestigen, und dann, über die elektrische Steckverbindung, eine elektrische Verbindung zum elektrischen Abnehmer des wenigstens einen Warenträgers herzustellen.

In einer weiteren vorteilhaften Ausgestaltung des Verkaufsregals gemäß dem ersten Aspekt der Erfindung weist das Verkaufsregal des Weiteren auf: wenigstens ein Netzteil, welches eingerichtet ist, eine Eingangsspannung aus einem Spannungsnetz, insbesondere einem Niederspannungsnetz, welche am Netzteil anliegt, in eine Versorgungsspannung für das wenigstens eine Steuergerät zu wandeln und an einer Stromversorgung bereitzustellen, wobei das wenigstens eine Netzteil vorzugsweise in einem Bodenfach des Verkaufsregals angeordnet ist.

Das Netzteil sorgt dafür, dass eine Eingangsspannung aus einem Spannungsnetz, insbesondere einem Niederspannungsnetz, welche am Netzteil anliegt, in eine für das Steuergerät erforderliche Versorgungsspannung gewandelt werden kann und die Versorgungsspannung an einer Stromversorgung, beispielsweise an einer in einem Regalsteher integrierten Stromversorgung, oder direkt an dem Stromversorgungsanschluss des Steuergeräts bereitgestellt werden kann.

Die Unterbringung des Netzteils in einem Bodenfach des Verkaufsregals sorgt für eine besonders platzsparende Integration des Netzteils in das Verkaufsregal.

In einer weiteren vorteilhaften Ausgestaltung des Verkaufsregals gemäß dem ersten Aspekt der Erfindung weist das Verkaufsregal des Weiteren auf: einen WLAN-Router, wobei das Steuergerät über die Netzwerkschnittstelle mit dem WLAN-Router signalübertragend verbindbar oder verbunden ist, wobei der WLAN-Router mit dem Server signalübertragend verbindbar oder verbunden ist und wobei der WLAN-Router eingerichtet ist, Steuerbefehle für eine Beleuchtungseinrichtung und/oder einen Sensor und /oder eine digitale Beschilderung zu empfangen und über die Netzwerkschnittstelle an das Steuergerät weiterzugeben sowie erfasste Daten und/oder Statusinformationen der Beleuchtungseinrichtung und/oder des Sensors und /oder der digitalen Beschilderung über die Netzwerkschnittstelle des Steuergerätes zu empfangen und an den Server zu übertragen; wobei der WLAN-Router vorzugsweise in einem Bodenfach des Verkaufsregals angeordnet ist.

Das Vorhandensein eines WLAN-Routers bietet den Vorteil, dass eine drahtlose Kommunikation zwischen dem Steuergerät und dem Server mittels WLAN möglich ist, wodurch kein Einsatz von Kabel notwendig ist und somit Kosten gespart werden können.

Die Unterbringung des WLAN-Routers in einem Bodenfach des Verkaufsregals sorgt für eine besonders platzsparende Integration des WLAN-Routers in das Verkaufsregal.

In einer weiteren vorteilhaften Ausgestaltung des Verkaufsregals gemäß dem ersten Aspekt der Erfindung ist die Netzwerkschnittstelle des Steuergeräts eine WIFI- und/oder ESP-NOW-Schnittstelle.

Dadurch ermöglicht die Netzwerkschnittstelle eine drahtlose Kommunikation des Steuergeräts mit einem Server mittels WLAN, wodurch kein Einsatz von Kabel notwendig ist und somit Kosten gespart werden können. ESP-NOW ermöglicht weiterhin eine direkte Kommunikation verschiedener Steuergeräte untereinander, ohne, dass ein Dazwischenschalten eines Routers und ohne, dass die Nutzung eines WLAN-Netzwerkes erforderlich ist.

In einer vorteilhaften Ausgestaltung des Verkaufsregalsystems gemäß dem zweiten Aspekt der Erfindung steuert ein erstes Steuergerät des Verkaufsregalsystems die übrigen Steuergeräte des Verkaufsregalsystems in einer Master/Slave-Architektur.

Dies bietet den Vorteil, dass durch das erste Steuergerät (den Master) alle Abläufe einfach verwaltet und zentral gesteuert werden können. Weiterhin ermöglicht die Verwendung einer Master/Slave-Architektur eine effiziente Ausnutzung der Kapazität des Netzwerks des Verkaufsregalsystems.

Vorzugsweise erfolgt die Kommunikation des ersten Steuergeräts mit den weiteren Steuergeräten mittels eines drahtlosen Kommunikationsprotokolls, insbesondere ESP-NOW.

ESP-NOW ermöglicht eine direkte Kommunikation verschiedener Steuergeräte untereinander, ohne, dass ein Dazwischenschalten eines Routers und ohne, dass die Nutzung eines WLAN-Netzwerkes erforderlich ist. Weiterhin kann durch die Verwendung von ESP-NOW ein geringer Energieverbrauch, hohe Datenraten sowie eine lange Reichweite gewährleistet werden.

In einer weiteren vorteilhaften Ausgestaltung des Verkaufsregalsystems gemäß dem zweiten Aspekt der Erfindung weist das Verkaufsregalsystem des Weiteren wenigstens ein mobiles Endgerät auf, wobei das wenigstens eine mobile Endgerät mit dem Server signalübertragend verbindbar oder verbunden ist, um Steuerbefehle für Beleuchtungseinrichtungen und/oder Sensoren und/oder digitale Beschilderungen der Steuergeräte an den Server zu übertragen und/oder um erfasste Daten und/oder Statusinformationen der Beleuchtungseinrichtungen und/oder der Sensoren und/oder der digitalen Beschilderungen der Steuergeräte von dem Server zu empfangen.

Dadurch kann ein Nutzer mobil, ohne sich in unmittelbare Nähe des Servers oder der Steuergeräte des Verkaufsregalsystems befinden zu müssen, Steuerbefehle für eine oder mehrere Beleuchtungseinrichtungen und/oder einen oder mehrere Sensoren und/oder eine oder mehrere digitale Beschilderungen der Steuergeräte des Verkaufsregalsystems an den Server senden, von wo aus die Steuerbefehle über die Netzwerkschnittstellen der Steuergeräte des Verkaufsregalsystems an die Steuergeräte weitergeleitet werden können. Ebenso hat dies den Vorteil, dass ein Nutzer mobil, ohne sich in unmittelbare Nähe des Servers oder der Steuergeräte des Verkaufsregalsystems befinden zu müssen, erfasste Daten und/oder Statusinformationen der einen oder mehreren Beleuchtungseinrichtungen und/oder des einen oder der mehreren Sensoren und/oder der einen oder mehreren digitalen Beschilderungen der Steuergeräte des Verkaufsregalsystems, die über die Netzwerkschnittstellen der Steuergeräte an den Server weitergeleitet wurden, von dem Server abrufen kann.

Vorzugsweise wird an das mobile Endgerät eine Warnnachricht ausgegeben, wenn wenigstens ein Sensor einen kritischen Wert detektiert.

Dies ermöglicht die Detektion eines Über- oder Unterschreitens eines Soll-Gewichts durch einen Gewichtssensor, die Detektion eines Überschreitens einer Soll-Neigung durch einen Neigungssensor, die Detektion eines Über- oder Unterschreitens einer Soll-Temperatur durch einen Temperatursensor, die Detektion eines Über- oder Unterschreitens eines Soll-Feuchtigkeitswerts durch einen Feuchtigkeitssensor, oder die Detektion einer Abwesenheit einer bestimmten Ware durch einen optischen Sensor. Durch die auf dem mobilen Endgerät ausgegebene Warnnachricht kann ein Nutzer des mobilen Endgeräts direkt informiert werden, dass entsprechende Instandhaltungsmaßnahmen an einem Verkaufsregal oder an einem Warenträger eines Verkaufsregals durchzuführen sind.

Die Erfindung wird im Folgenden anhand von nicht einschränkenden Ausführungsbeispielen, die in den Figuren dargestellt sind, näher erläutert. Darin zeigen wenigstens teilweise schematisch:
- **Fig. 1**: eine perspektivische Ansicht eines Ausführungsbeispiels eines Steuergeräts eines Verkaufsregals;
- **Fig. 2**: eine perspektivische Ansicht eines Ausführungsbeispiels eines Verkaufsregals;
- **Fig. 3**: eine perspektivische Ansicht eines Ausschnitts aus dem Ausführungsbeispiel eines Verkaufsregals gemäß Fig. 2; und
- **Fig. 4**: eine schematische Darstellung eines Ausführungsbeispiels eines Verkaufsregalsystems.

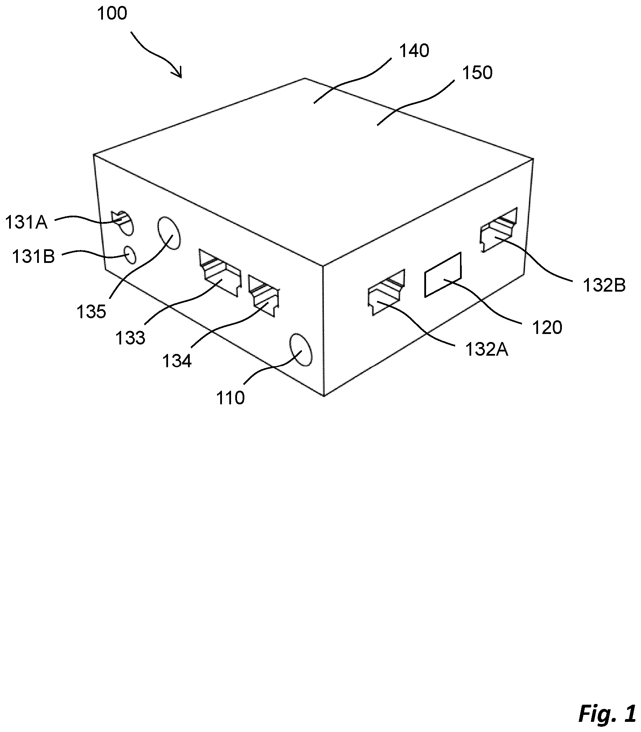

**Fig. 1** zeigt schematisch ein Ausführungsbeispiel eines Steuergeräts 100 eines Verkaufsregals 10.

Das Steuergerät 100 weist einen Stromversorgungsanschluss 110, eine Netzwerkschnittstelle 120, zwei erste Schnittstellen 131A und 131B, zwei zweite Schnittstellen 132A und 132B, eine dritte Schnittstelle 133, eine vierte Schnittstelle 134, eine Open-Schnittstelle 135, welche programmierbar ist, einen Spannungswandler 140 und einen A/D-Wandler 150 auf.

Das Gehäuse des Steuergerätes 100 ist vorzugsweise aus einem magnetischen Material, sodass das Steuergerät 100 magnetisch an einem Magnet eines Warenträger 13 (nicht gezeigt) eines Verkaufsregals 10 (nicht gezeigt) angebracht, insbesondere befestigt, werden kann.

Über den Stromversorgungsanschluss 110 kann das Steuergerät 100 mit Strom versorgt werden. Vorzugsweise liegt am Stromversorgungsanschluss 110 eine für das Steuergerät 110 erforderliche Versorgungsspannung an, welche von einem Netzteil 11 (nicht gezeigt), welches eine Eingangsspannung aus einem Spannungsnetz, insbesondere einem Niederspannungsnetz, welche am Netzteil 11 anliegt, in eine Versorgungsspannung für das Steuergerät 100 wandelt, bereitgestellt wird.

Die zwei ersten Schnittstellen 131A und 131B sind eingerichtet zur Ansteuerung und elektrischen Versorgung einer Beleuchtungseinrichtung B (nicht gezeigt). Vorzugsweise sind die zwei ersten Schnittstellen 131A und 131B unterschiedlich ausgebildet, sodass Beleuchtungseinrichtungen B mit unterschiedlichen Anschlüssen an das Steuergerät 100 angeschlossen werden können. Alternativ kann das Steuergerät auch nur eine erste Schnittstelle 131 oder mehr als zwei erste Schnittstellen 131A, 131B, 131C, ... aufweisen.

Die zwei zweiten Schnittstellen 132A und 132B sind eingerichtet zur Ansteuerung und elektrischen Versorgung eines Sensors S (nicht gezeigt). Vorzugsweise sind die zwei zweiten Schnittstellen 132A und 132B unterschiedlich ausgebildet, sodass Sensoren S mit unterschiedlichen Anschlüssen an das Steuergerät 100 angeschlossen werden können. Vorzugsweise umfassen die zwei zweiten Schnittstellen 132A und 132B wenigstens eine serielle Schnittstelle, insbesondere 1-Wire. Alternativ kann das Steuergerät auch nur eine zweite Schnittstelle 132 oder mehr als zwei zweite Schnittstellen 132A, 132B, 132C, ... umfassen.

Die zwei zweite Schnittstellen 132A und 132 B sind vorzugsweise zur Ansteuerung und elektrischen Versorgung eines Sensors S aus der nachfolgenden Gruppe an Sensoren S eingerichtet: Gewichtssensor, insbesondere eine Wiegezelle, Neigungssensor, Temperatursensor, Feuchtigkeitssensor oder optischer Sensor, insbesondere eine Kamera.

Die dritte Schnittstelle 133 ist eingerichtet zur Ansteuerung und elektrischen Versorgung einer digitalen Beschilderung D (nicht gezeigt). Vorzugsweise ist die dritte Schnittstelle eine Schnittstelle für asynchrone serielle Datenübertragung, insbesondere RS-485. Alternativ kann das Steuergerät auch keine oder mehr als eine dritte Schnittstelle 133A, 133B, ... umfassen.

Die vierte Schnittstelle 134 ist eingerichtet zur elektrischen Versorgung digitaler Preisschilder P (nicht gezeigt), insbesondere über eine Stromschiene, auf welcher die digitalen Preisschilder P montiert sind. Alternativ kann das Steuergerät auch keine oder mehr als eine vierte Schnittstelle 134A, 134B, ... umfassen.

Die Open-Schnittstelle 135 kann individuell programmiert werden, sodass weitere Elektrik- und/oder Elektronikkomponenten an das Steuergerät 100 angeschlossen werden können. Alternativ kann das Steuergerät auch keine oder mehr als eine Open-Schnittstelle 135A, 135B, ... umfassen.

Der Spannungswandler 140 ist eingerichtet, eine Eingangsspannung, welche über ein Netzteil 11 an dem Stromversorgungsanschluss 110 anliegt, in Versorgungsspannungen für die zwei ersten Schnittstellen 131A und 131B, für die zwei zweiten Schnittstellen 132A und 132B, für die dritte Schnittstelle 133, für die vierte Schnittstelle 134 und für die Open-Schnittstelle 135 zu wandeln.

Der Spannungswandler 140 ist vorzugsweise eingerichtet, bei einer Eingangsspannung von 24V, Versorgungsspannungen von 24V, 12V, 9V, 5V und 3,3V bereitzustellen.

Der A/D-Wandler 150 ist eingerichtet, analoge Messignale wenigstens eines Sensors S, insbesondere eines Gewichtssensors, in digitale Messignale umzuwandeln.

Das Steuergerät 100 ist eingerichtet, Steuerbefehle für Beleuchtungseinrichtungen B, Sensoren S und digitale Beschilderungen D über die Netzwerkschnittstelle 120 von einem Server 51 (nicht gezeigt) zu empfangen und die Beleuchtungseinrichtungen B über die zwei erste Schnittstellen 131A und 131B, die Sensoren S über die zwei zweite Schnittstellen 132A und 132B und die digitale Beschilderung D über die dritte Schnittstelle 133 entsprechend anzusteuern sowie erfasste Daten und/oder Statusinformationen der Beleuchtungseinrichtungen B über die zwei ersten Schnittstellen 131A und 131B, der Sensoren S über die zwei zweiten Schnittstellen 132A und 132B und der digitalen Beschilderung D über die dritte Schnittstelle 133 einzulesen und über die Netzwerkschnittstelle 120 an den Server 51 zu übertragen.

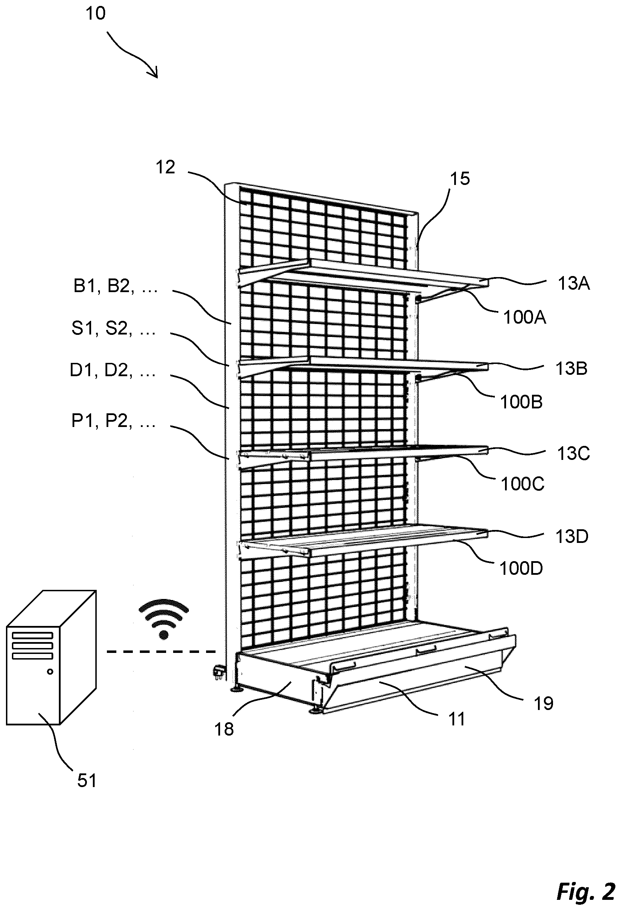

**Fig. 2** zeigt schematisch ein Ausführungsbeispiel eines Verkaufsregals 10.

Das Verkaufsregal 10 weist ein Netzteil 11, einen Regalsteher 12, einen ersten Warenträger 13A mit einem ersten Steuergerät 100A, einen zweiten Warenträger 13B mit einem zweiten Steuergerät 100B, einen dritten Warenträger 13C mit einem dritten Steuergerät 100C, einen vierten Warenträger 13D mit einem vierten Steuergerät 100D, eine Stromversorgung 15, ein Bodenfach 18 und einen WLAN-Router 19 auf.

Das Netzteil 11 ist eingerichtet, eine Eingangsspannung aus einem Spannungsnetz, insbesondere einem Niederspannungsnetz, welche am Netzteil 11 anliegt, in eine Versorgungsspannung für das erste Steuergerät 100A, das zweite Steuergerät 100 B, das dritte Steuergerät 100C und das vierte Steuergerät 100D zu wandeln und an der Stromversorgung 15, welche in den Regalsteher 12 integriert ist, bereitzustellen. Das Netzteil 11 ist vorzugsweise in dem Bodenfach 18 des Verkaufsregals 10 angeordnet.

Der erste Warenträger 13A, der zweite Warenträger 13B, der dritte Warenträger 13C und der vierte Warenträger 13D sind jeweils, insbesondere über einen Befestigungsmechanismus 14, welcher dazu eingerichtet ist, den einen Warenträger 13 an dem Regalsteher 12 zu befestigen, am Regalsteher 12 befestigt.

Das erste Steuergerät 100A weist eine Netzwerkschnittstelle 120A auf. Das zweite Steuergerät 100B weist eine Netzwerkschnittstelle 120B auf. Das dritte Steuergerät 100C weist eine Netzwerkschnittstelle 120C auf. Das vierte Steuergerät 100D weist eine Netzwerkschnittstelle 120D auf.

Des Weiteren können das erste Steuergerät 100A, das zweite Steuergerät 100B, das dritte Steuergerät 100C und das vierte Steuergerät 100D insbesondere wie das in **Fig. 1** dargestellte Ausführungsbeispiel eines Steuergeräts 100 ausgebildet sein. Alternativ können das erste Steuergerät 100A, das zweite Steuergerät 100 B, das dritte Steuergerät 100C und das vierte Steuergerät 100D aber auch anders als das in **Fig. 1** dargestellte Ausführungsbeispiel eines Steuergeräts 100 ausgebildet sein, insbesondere in Hinblick auf die Anzahl der vorhandenen Schnittstellen 131, 132, 133, 134, 135.

In diesem Ausführungsbeispiel ist an jedem Warenträger 13A, 13B, 13C, 13D ein entsprechendes Steuergerät 100A, 100B, 100C, 100D angebracht, insbesondere befestigt. Alternativ kann auch nur an einzelnen Warenträgern oder an einem einzigen Warenträger 13 des Verkaufsregals 10 ein entsprechendes Steuergerät 100 angebracht, insbesondere befestigt, sein.

Das Verkaufsregal 10 kann des Weiteren eine oder mehrere Beleuchtungseinrichtungen B1, B2, ..., eine oder mehrere Sensoren S1, S2, ..., eine oder mehrere digitale Beschilderungen D1, D2, ... sowie eine oder mehrere Stromschienen jeweils mit digitalen Preisschildern P1, P2, ... aufweisen.

Die eine oder mehreren Beleuchtungseinrichtungen B1, B2, ..., der eine oder die mehreren Sensoren S1, S2, ..., die eine oder mehrere digitale Beschilderungen D1, D2, ... sowie die eine oder mehrere Stromschienen jeweils mit digitalen Preisschildern P1, P2, ... können dabei an dem ersten Warenträger 13A und/oder an dem zweiten Warenträger 13B und/oder an dem dritten Warenträger 13C und/oder an dem vierten Warenträger 13D angebracht sein.

Die eine oder mehreren Beleuchtungseinrichtungen B1, B2, ..., können dabei über eine erste Schnittstelle 131 des ersten Steuergeräts 100A und/oder über eine erste Schnittstelle 131 des zweiten Steuergeräts 100B und/oder über eine erste Schnittstelle 131 des dritten Steuergeräts 100C und/oder über eine erste Schnittstelle 131 des vierten Steuergeräts 100D angeschlossen und somit in das Verkaufsregal 10 integriert sein.

Der eine oder die mehreren Sensoren S1, S2, ..., können dabei über eine zweite Schnittstelle 132 des ersten Steuergeräts 100A und/oder über eine zweite Schnittstelle 132 des zweiten Steuergeräts 100B und/oder über eine zweite Schnittstelle 132 des dritten Steuergeräts 100C und/oder über eine zweite Schnittstelle 132 des vierten Steuergeräts 100D angeschlossen und somit in das Verkaufsregal 10 integriert sein.

Die eine oder mehreren digitale Beschilderungen D1, D2, ... können dabei über eine dritte Schnittstelle 133 des ersten Steuergeräts 100A und/oder über eine dritte Schnittstelle 133 des zweiten Steuergeräts 100B und/oder über eine dritte Schnittstelle 133 des dritten Steuergeräts 100C und/oder über eine dritte Schnittstelle 133 des vierten Steuergeräts 100D angeschlossen und somit in das Verkaufsregal 10 integriert sein.

Die digitalen Preisschilder P1, P2, ... können dabei über eine vierte Schnittstelle 134 des ersten Steuergeräts 100A und/oder über eine vierte Schnittstelle 134 des zweiten Steuergeräts 100B und/oder über eine vierte Schnittstelle 134 des dritten Steuergeräts 100C und/oder über eine vierte Schnittstelle 134 des vierten Steuergeräts 100D angeschlossen und somit in das Verkaufsregal 10 integriert sein.

Der eine oder die mehreren Sensoren S1, S2, ..., können ein Gewichtssensor, insbesondere eine Wiegezelle, sein, der ein Über- oder Unterschreiten eines Soll-Gewichts und somit insbesondere die Anwesenheit oder Abwesenheit einer Ware oder mehrerer Waren detektiert und somit zur Bestandserkennung und Bestandsüberwachung oder zur Überwachung einer etwaigen Überladung des Verkaufsregals eingesetzt werden kann.

Der eine oder die mehreren Sensoren S1, S2, ..., können ein Neigungssensor sein, der zur Detektion eines Überschreitens einer Soll-Neigung und somit zur Überwachung einer etwaigen Überladung des Verkaufsregals eingesetzt werden kann.

Der eine oder die mehreren Sensoren S1, S2, ..., können ein Temperatursensor sein, der zur Überwachung des Verkaufsregals, insbesondere einer Detektion von Abweichungen von warenspezifischen Soll-Temperaturen, eingesetzt werden kann.

Der eine oder die mehreren Sensoren S1, S2, ..., können ein Feuchtigkeitssensor sein, der zur Überwachung des Verkaufsregals, insbesondere einer Detektion von Abweichungen von warenspezifischen Soll-Feuchtigkeitswerten, eingesetzt werden kann.

Der eine oder die mehreren Sensoren S1, S2, ..., können ein optischer Sensor, insbesondere eine Kamera, sein, der die Anwesenheit oder Abwesenheit einer Ware oder mehrerer Waren detektiert und somit zur Bestandserkennung und Bestandsüberwachung eingesetzt werden kann.

Das erste Steuergerät 100A, das zweite Steuergerät 100B, das dritte Steuergerät 100C und das vierte Steuergerät 100D sind jeweils eingerichtet, Steuerbefehle für die eine oder mehreren Beleuchtungseinrichtungen B1, B2, ... und/oder den einen oder die mehreren Sensoren S1, S2, ... und/oder die eine oder mehreren digitalen Beschilderungen D1, D2, ... über die Netzwerkschnittstelle 120A, 120B, 120C bzw. 120D von dem Server 51 zu empfangen und die eine oder mehreren Beleuchtungseinrichtungen B1, B2, ... über eine oder mehrere erste Schnittstellen 131 und/oder den einen oder die mehreren Sensoren S1, S2, ... über eine oder mehrere zweite Schnittstellen 132 und/oder die eine oder mehreren digitalen Beschilderungen D1, D2, ... über eine oder mehrere dritte Schnittstellen 133 entsprechend anzusteuern sowie erfasste Daten und/oder Statusinformationen der einen oder mehreren Beleuchtungseinrichtungen B1, B2, ... über eine oder mehrere erste Schnittstellen 131 und/oder des einen oder der mehreren Sensoren S1, S2, ... über eine oder mehrere zweite Schnittstellen 132 und/oder der einen oder mehreren digitalen Beschilderungen D1, D2, ... über eine oder mehrere dritte Schnittstellen 133 einzulesen und über die Netzwerkschnittstelle 120A, 120B, 120C bzw. 120D an den Server 51 zu übertragen.

Das erste Steuergerät 100A kann über die Netzwerkschnittstelle 120A, das zweite Steuergerät 100B über die Netzwerkschnittstelle 120B, das dritte Steuergerät 100C über die Netzwerkschnittstelle 120C und das vierte Steuergerät 100D über die Netzwerkschnittstelle 120D mit dem WLAN-Router 19 signalübertragend verbindbar oder verbunden sein, wobei der WLAN-Router 19 mit dem Server 51 signalübertragend verbindbar oder verbunden ist und wobei der WLAN-Router 19 eingerichtet ist, Steuerbefehle für die eine oder mehreren Beleuchtungseinrichtungen B1, B2, ... und/oder den einen oder die mehreren Sensoren S1, S2, ... und/oder die eine oder mehreren digitalen Beschilderungen D1, D2, ... von dem Server 51 zu empfangen und über die Netzwerkschnittstelle 120A an das erste Steuergerät 100A und/oder über die Netzwerkschnittstelle 120B an das zweite Steuergerät 100B und/oder über die Netzwerkschnittstelle 120C an das dritte Steuergerät 100C und/oder über die Netzwerkschnittstelle 120D an das vierte Steuergerät 100D weiterzugeben sowie erfasste Daten und/oder Statusinformationen der einen oder mehreren Beleuchtungseinrichtungen B1, B2, ... und/oder des einen oder der mehreren Sensoren S1, S2, ... und/oder der einen oder mehreren digitalen Beschilderungen D1, D2, ... über die Netzwerkschnittstelle 120A und/oder über die Netzwerkschnittstelle 120B und/oder über die Netzwerkschnittstelle 120C und/oder über die Netzwerkschnittstelle 120D zu empfangen und an den Server 51 zu übertragen. Der WLAN-Router 19 ist vorzugsweise in dem Bodenfach 18 des Verkaufsregals 10 angeordnet.

Das Steuergerät 100 wird vorzugsweise magnetisch an dem Verkaufsregal 10 angebracht, insbesondere an dem Regalsteher 12 oder einem Warenträger 13.

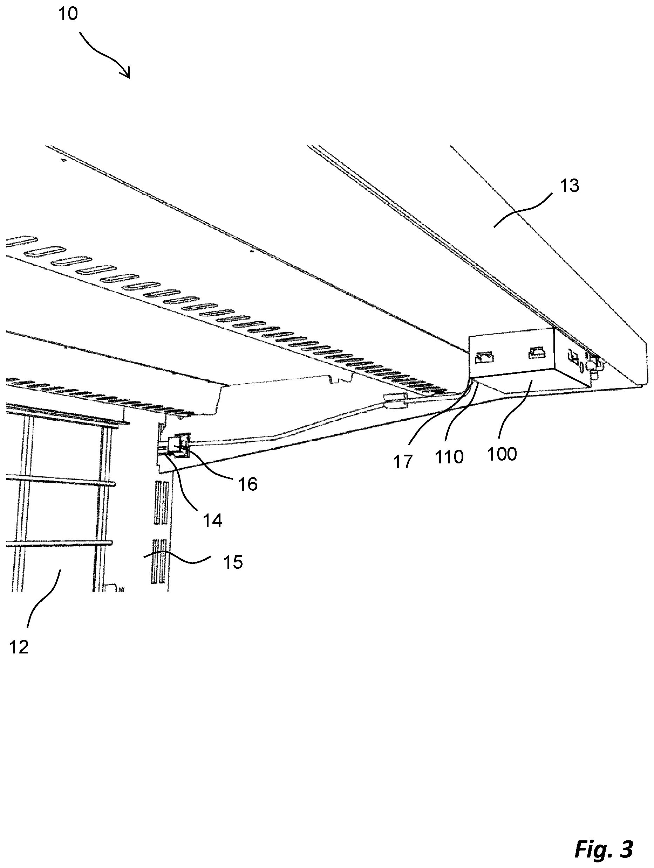

**Fig. 3** zeigt schematisch eine perspektivische Ansicht eines Ausschnitts aus dem Ausführungsbeispiel eines Verkaufsregals 10 aus **Fig. 2****.**

Gezeigt sind schematisch ein Regalsteher 12 mit einem Warenträger 13, ein Befestigungsmechanismus 14, eine Stromversorgung 15, ein elektrischer Abnehmer 16, eine elektrische Steckverbindung 17 sowie ein Steuergerät 100 mit einem Stromversorgungsanschluss 110.

Der Warenträger 13 ist über den Befestigungsmechanismus 14, welcher dazu eingerichtet ist, einen Warenträger 13 an einem Regalsteher 12 zu befestigen, am Regalsteher 12 befestigt.

In den Regalsteher 12 ist eine Stromversorgung 15 integriert. Der elektrische Abnehmer 16 des Warenträgers 13 ist in dem Befestigungsmechanismus 14 integriert und ist eingerichtet, das Steuergerät 100 mit Energie zu versorgen, wenn der Warenträger 13 über den Befestigungsmechanismus 14 an dem Regalsteher 12 befestigt ist. Der Stromversorgungsanschluss 110 des Steuergeräts 100 weist zur elektrischen Verbindung mit dem elektrischen Abnehmer 16 des Warenträgers 13 vorzugsweise eine elektrische Steckverbindung 17 auf.

Das Steuergerät 100 ist lösbar, insbesondere magnetisch, an dem Warenträger 13 angebracht, insbesondere befestigt. Hierfür ist an dem Warenträger 13 vorzugsweise ein Magnet (nicht gezeigt) befestigt. Alternativ ist an dem Warenträger 13 eine Platte eines magnetischen Materials befestigt, an welchem ein an dem Steuergerät 100 befestigter Magnet angekoppelt werden kann. Weiter vorzugsweise weist der Warenträger 13 selbst wenigstens abschnittsweise ein magnetisches Material auf.

Alternativ kann das Steuergerät 100 auch an einem Fachboden des Verkaufsregals 10 angebracht, insbesondere befestigt, sein. Weiter alternativ kann das Steuergerät 100 auch an oder in einer Regalkonsole des Verkaufsregals 10 angebracht, insbesondere befestigt, sein.

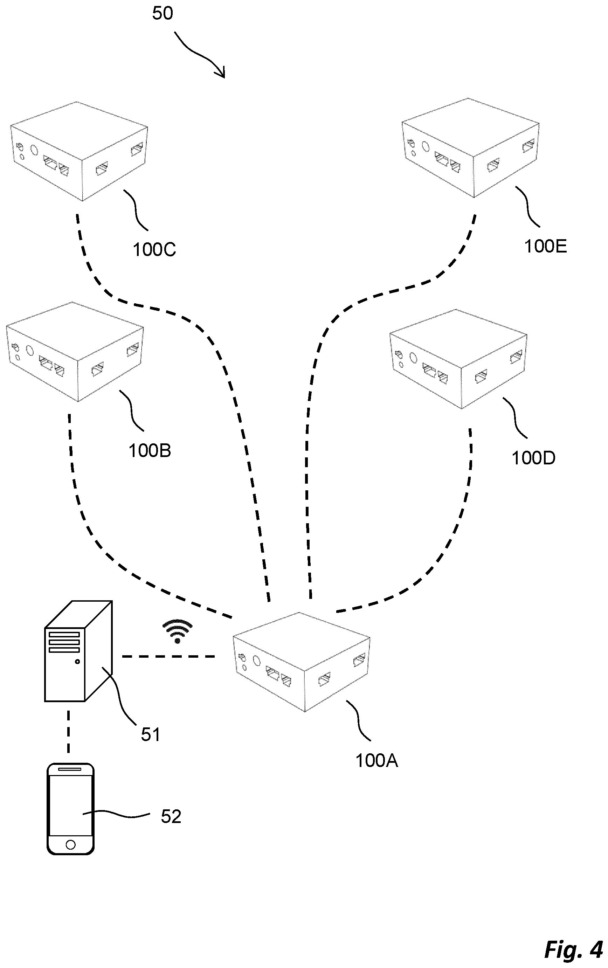

**Fig. 4** zeigt eine schematische Darstellung eines Ausführungsbeispiels eines Verkaufsregalsystems 50.

Das Verkaufsregalsystem 50 umfasst ein erstes Steuergerät 100A, ein zweites Steuergerät 100B, ein drittes Steuergerät 100C, ein viertes Steuergerät 100D, ein fünftes Steuergerät 100E, einen Server 51 und ein mobiles Endgerät 52.

Das Verkaufsregalsystem 50 in diesem Ausführungsbeispiel weist fünf Steuergeräte 100A, 100B, 100C, 100D, 100E auf. Alternativ kann das Verkaufsregalsystem 50 aber auch weniger als fünf Steuergeräte 100 oder mehr als fünf Steuergeräte 100 aufweisen.

Das erste Steuergerät 100A, das zweite Steuergerät 100B, das dritte Steuergerät 100C, das vierte Steuergerät 100D und das fünfte Steuergerät 100E können alle an unterschiedlichen Verkaufsregalen 10A, 10B, 10C, 10D, 10E angebracht, insbesondere befestigt, sein. Alternativ können das erste Steuergerät 100A, das zweite Steuergerät 100B, das dritte Steuergerät 100C, das vierte Steuergerät 100D und das fünfte Steuergerät 100E nur teilweise an unterschiedlichen Verkaufsregalen 10A, 10B, ... angebracht, insbesondere befestigt, sein. Weiter alternativ können das erste Steuergerät 100A, das zweite Steuergerät 100B, das dritte Steuergerät 100C, das vierte Steuergerät 100D und das fünfte Steuergerät 100E alle an demselben Verkaufsregal 10 angebracht, insbesondere befestigt, sein.

Das Verkaufsregal 10 bzw. die Verkaufsregale 10A, 10B, ... des Verkaufsregalsystems 50 können insbesondere wie das in **Fig. 2** dargestellte Ausführungsbeispiel eines Verkaufsregals ausgebildet sein. Alternativ können das Verkaufsregal 10 bzw. die Verkaufsregale 10A, 10B, ... des Verkaufsregalsystems 50 auch anders als das in **Fig. 2** dargestellte Ausführungsbeispiel eines Verkaufsregals ausgebildet sein, insbesondere hinsichtlich der Anzahl der vorhanden Warenträger 13 und der Anzahl der vorhandenen Steuergeräte 100.

Des Weiteren können das erste Steuergerät 100A, das zweite Steuergerät 100B, das dritte Steuergerät 100C, das vierte Steuergerät 100D und das fünfte Steuergerät 100E insbesondere wie das in **Fig. 1** dargestellte Ausführungsbeispiel eines Steuergeräts 100 ausgebildet sein. Alternativ können das erste Steuergerät 100A, das zweite Steuergerät 100 B, das dritte Steuergerät 100C, das vierte Steuergerät 100D und das fünfte Steuergerät 100E aber auch anders als das in **Fig. 1** dargestellte Ausführungsbeispiel eines Steuergeräts 100 ausgebildet sein, insbesondere in Hinblick auf die Anzahl der vorhandenen Schnittstellen 131, 132, 133, 134, 135. Das erste Steuergerät 100A weist jedoch insbesondere eine Netzwerkschnittstelle 120A, das zweite Steuergerät 100B eine Netzwerkschnittstelle 120B, das dritte Steuergerät 100C eine Netzwerkschnittstelle 120C, das vierte Steuergerät 100D eine Netzwerkschnittstelle 120D und das fünfte Steuergerät 100E eine Netzwerkschnittstelle 120E auf.

Das Verkaufsregal 10 bzw. die Verkaufsregale 10A, 10B, ... können jeweils ein oder mehrere Beleuchtungseinrichtungen B1, B2, ... (nicht gezeigt), ein oder mehrere Sensoren S1, S2, ... (nicht gezeigt) ein oder mehrere digitale Beschilderungen D1, D2, ... (nicht gezeigt), eine oder mehrere Stromschienen jeweils mit digitalen Preisschildern P1, P2, ... (nicht gezeigt) aufweisen.

Die eine oder mehreren Beleuchtungseinrichtungen B1, B2, ..., können dabei über eine erste Schnittstelle 131 des ersten Steuergeräts 100A und/oder über eine erste Schnittstelle 131 des zweiten Steuergeräts 100B und/oder über eine erste Schnittstelle 131 des dritten Steuergeräts 100C und/oder über eine erste Schnittstelle 131 des vierten Steuergeräts 100D und/der über eine erste Schnittstelle 131 des fünften Steuergeräts 100E angeschlossen und somit in das Verkaufsregalsystem 50 integriert sein.

Der eine oder die mehreren Sensoren S1, S2, ..., können dabei über eine zweite Schnittstelle 132 des ersten Steuergeräts 100A und/oder über eine zweite Schnittstelle 132 des zweiten Steuergeräts 100B und/oder über eine zweite Schnittstelle 132 des dritten Steuergeräts 100C und/oder über eine zweite Schnittstelle 132 des vierten Steuergeräts 100D und/oder über eine zweite Schnittstelle 132 des fünften Steuergeräts 100E angeschlossen und somit in das Verkaufsregalsystem 50 integriert sein.

Die eine oder mehreren digitale Beschilderungen D1, D2, ... können dabei über eine dritte Schnittstelle 133 des ersten Steuergeräts 100A und/oder über eine dritte Schnittstelle 133 des zweiten Steuergeräts 100B und/oder über eine dritte Schnittstelle 133 des dritten Steuergeräts 100C und/oder über eine dritte Schnittstelle 133 des vierten Steuergeräts 100D und/oder über eine dritte Schnittstelle 133 des fünften Steuergeräts 100E angeschlossen und somit in das Verkaufsregalsystem 50 integriert sein.

Die digitalen Preisschilder P1, P2, ... können dabei über eine vierte Schnittstelle 134 des ersten Steuergeräts 100A und/oder über eine vierte Schnittstelle 134 des zweiten Steuergeräts 100B und/oder über eine vierte Schnittstelle 134 des dritten Steuergeräts 100C und/oder über eine vierte Schnittstelle 134 des vierten Steuergeräts 100D und/oder über eine vierte Schnittstelle 134 des fünften Steuergeräts 100E angeschlossen und somit in das Verkaufsregalsystem 50 integriert sein.

Der eine oder die mehreren Sensoren S1, S2, ..., können ein Gewichtssensor, insbesondere eine Wiegezelle, sein, der ein Über- oder Unterschreiten eines Soll-Gewichts und somit insbesondere die Anwesenheit oder Abwesenheit einer Ware oder mehrerer Waren detektiert und somit zur Bestandserkennung und Bestandsüberwachung oder zur Überwachung einer etwaigen Überladung des Verkaufsregals eingesetzt werden kann.

Der eine oder die mehreren Sensoren S1, S2, ..., können ein Neigungssensor sein, der zur Detektion eines Überschreitens einer Soll-Neigung und somit zur Überwachung einer etwaigen Überladung des Verkaufsregals eingesetzt werden kann.

Der eine oder die mehreren Sensoren S1, S2, ..., können ein Temperatursensor sein, der zur Überwachung des Verkaufsregals, insbesondere einer Detektion von Abweichungen von warenspezifischen Soll-Temperaturen, eingesetzt werden kann.

Der eine oder die mehreren Sensoren S1, S2, ..., können ein Feuchtigkeitssensor sein, der zur Überwachung des Verkaufsregals, insbesondere einer Detektion von Abweichungen von warenspezifischen Soll-Feuchtigkeitswerten, eingesetzt werden kann.

Der eine oder die mehreren Sensoren S1, S2, ..., können ein optischer Sensor, insbesondere eine Kamera, sein, der die Anwesenheit oder Abwesenheit einer Ware oder mehrerer Waren detektiert und somit zur Bestandserkennung und Bestandsüberwachung eingesetzt werden kann.

Die Kommunikation unter den Steuergeräten 100A, 100B, 100C, 100D, 100E erfolgt über deren Netzwerkschnittstellen 120A, 120B, 120C, 120D. Vorzugsweise steuert das erste Steuergerät 100A das zweite Steuergerät 100B, das dritte Steuergerät 100C, das vierte Steuergerät 100D und das fünfte Steuergerät 100E in einer Master/Slave-Architektur.

Somit erfolgt eine Kommunikation nur zwischen dem ersten Steuergerät 100A und dem zweiten Steuergerät 100B, dem dritten Steuergerät 100C, dem vierten Steuergerät 100D und dem fünften Steuergerät 100E. Zwischen dem zweiten Steuergerät 100B, dem dritten Steuergerät 100C, dem vierten Steuergerät 100D und dem fünften Steuergerät 100E erfolgt untereinander keine Kommunikation.

Das erste Steuergerät 100A ist eingerichtet, Steuerbefehle für eine oder mehrere Beleuchtungseinrichtungen B1, B2, ... und/oder eine oder mehrere Sensoren S1, S2, ... und/oder eine oder mehrere digitale Beschilderungen D1, D2, ... des ersten Steuergeräts 100A über die Netzwerkschnittstelle 120A des ersten Steuergeräts 100A von dem Server 51 zu empfangen und über eine oder mehrere erste Schnittstellen 131 des ersten Steuergeräts 100A an die eine oder mehrere Beleuchtungseinrichtungen B1, B2, ... des ersten Steuergeräts 100A und/oder über eine oder mehrere zweite Schnittstellen 132 des ersten Steuergeräts 100A an den einen oder die mehreren Sensoren S1, S2, ... des ersten Steuergeräts 100A und/oder über eine oder mehrere dritte Schnittstellen 133 des ersten Steuergeräts 100A an die eine oder mehreren digitalen Beschilderungen D1, D2, ... des ersten Steuergeräts 100A weiterzugeben sowie erfasste Daten und/oder Statusinformationen der einen oder mehreren Beleuchtungseinrichtungen B1, B2, ... des ersten Steuergeräts 100A über eine oder mehrere erste Schnittstellen 131 des ersten Steuergeräts 100A und/oder des einen oder der mehreren Sensoren S1, S2, ... des ersten Steuergeräts 100A über eine oder mehrere zweite Schnittstellen 132 des ersten Steuergeräts 100A und/oder der einen oder mehreren digitalen Beschilderungen D1, D2, ... des ersten Steuergeräts 100A über eine oder mehrere dritte Schnittstellen 133 des ersten Steuergeräts 100A einzulesen und über die Netzwerkschnittstelle 120A des ersten Steuergeräts 100A an den Server 51 zu übertragen.

Ferner ist das erste Steuergerät 100A eingerichtet, Steuerbefehle für eine oder mehrere Beleuchtungseinrichtungen B1, B2, ... und/oder eine oder mehrere Sensoren S1, S2, ... und/oder eine oder mehrere digitale Beschilderungen D1, D2, ... des zweiten Steuergeräts 100B über die Netzwerkschnittstelle 120A des ersten Steuergeräts 100A von dem Server 51 zu empfangen und über die Netzwerkschnittstelle 120A des ersten Steuergeräts 100A und die Netzwerkschnittstelle 120B des zweiten Steuergeräts 100B direkt an das zweite Steuergerät 100B zu übertragen sowie erfasste Daten und/oder Statusinformationen der einen oder mehreren Beleuchtungseinrichtungen B1, B2, ... und/oder des einen oder der mehreren Sensoren S1, S2, ... und/oder der einen oder mehreren digitalen Beschilderungen D1, D2, ... des zweiten Steuergeräts 100B über die Netzwerkschnittstelle 120A des ersten Steuergeräts 100A und die Netzwerkschnittstelle 120B des zweiten Steuergeräts 100B direkt von dem zweiten Steuergerät 100B zu empfangen und über die Netzwerkschnittstelle 120A des ersten Steuergeräts 100A an den Server 51 zu übertragen.

Ferner ist das erste Steuergerät 100A eingerichtet, Steuerbefehle für eine oder mehrere Beleuchtungseinrichtungen B1, B2, ... und/oder eine oder mehrere Sensoren S1, S2, ... und/oder eine oder mehrere digitale Beschilderungen D1, D2, ... des dritten Steuergeräts 100C über die Netzwerkschnittstelle 120A des ersten Steuergeräts 100A von dem Server 51 zu empfangen und über die Netzwerkschnittstelle 120A des ersten Steuergeräts 100A und die Netzwerkschnittstelle 120C des dritten Steuergeräts 100C direkt an das dritte Steuergerät 100C zu übertragen sowie erfasste Daten und/oder Statusinformationen der einen oder mehreren Beleuchtungseinrichtungen B1, B2, ... und/oder des einen oder der mehreren Sensoren S1, S2, ... und/oder der einen oder mehreren digitalen Beschilderungen D1, D2, ... des dritten Steuergeräts 100C über die Netzwerkschnittstelle 120A des ersten Steuergeräts 100A und die Netzwerkschnittstelle 120C des dritten Steuergeräts 100C direkt von dem dritten Steuergerät 100C zu empfangen und über die Netzwerkschnittstelle 120A des ersten Steuergeräts 100A an den Server 51 zu übertragen.

Ferner ist das erste Steuergerät 100A eingerichtet, Steuerbefehle für eine oder mehrere Beleuchtungseinrichtungen B1, B2, ... und/oder eine oder mehrere Sensoren S1, S2, ... und/oder eine oder mehrere digitale Beschilderungen D1, D2, ... des vierten Steuergeräts 100D über die Netzwerkschnittstelle 120A des ersten Steuergeräts 100A von dem Server 51 zu empfangen und über die Netzwerkschnittstelle 120A des ersten Steuergeräts 100A und die Netzwerkschnittstelle 120D des vierten Steuergeräts 100D direkt an das vierte Steuergerät 100D zu übertragen sowie erfasste Daten und/oder Statusinformationen der einen oder mehreren Beleuchtungseinrichtungen B1, B2, ... und/oder des einen oder der mehreren Sensoren S1, S2, ... und/oder der einen oder mehreren digitalen Beschilderungen D1, D2, ... des vierten Steuergeräts 100D über die Netzwerkschnittstelle 120A des ersten Steuergeräts 100A und die Netzwerkschnittstelle 120D des vierten Steuergeräts 100D direkt von dem vierten Steuergerät 100D zu empfangen und über die Netzwerkschnittstelle 120A des ersten Steuergeräts 100A an den Server 51 zu übertragen.

Ferner ist das erste Steuergerät 100A eingerichtet, Steuerbefehle für eine oder mehrere Beleuchtungseinrichtungen B1, B2, ... und/oder eine oder mehrere Sensoren S1, S2, ... und/oder eine oder mehrere digitale Beschilderungen D1, D2, ... des fünften Steuergeräts 100E über die Netzwerkschnittstelle 120A des ersten Steuergeräts 100A von dem Server 51 zu empfangen und über die Netzwerkschnittstelle 120A des ersten Steuergeräts 100A und die Netzwerkschnittstelle 120E des fünften Steuergeräts 100E direkt an das fünfte Steuergerät 100E zu übertragen sowie erfasste Daten und/oder Statusinformationen der einen oder mehreren Beleuchtungseinrichtungen B1, B2, ... und/oder des einen oder der mehreren Sensoren S1, S2, ... und/oder der einen oder mehreren digitalen Beschilderungen D1, D2, ... des fünften Steuergeräts 100E über die Netzwerkschnittstelle 120A des ersten Steuergeräts 100A und die Netzwerkschnittstelle 120E des fünften Steuergeräts 100E direkt von dem fünften Steuergerät 100E zu empfangen und über die Netzwerkschnittstelle 120A des ersten Steuergeräts 100A an den Server 51 zu übertragen.

Das zweite Steuergerät 100B ist eingerichtet, Steuerbefehle für eine oder mehrere Beleuchtungseinrichtungen B1, B2, ... und/oder eine oder mehrere Sensoren S1, S2, ... und/oder eine oder mehrere digitale Beschilderungen D1, D2, ... des zweiten Steuergeräts 100B über die Netzwerkschnittstelle 120B des zweiten Steuergeräts 100B und die Netzwerkschnittstelle 120A des ersten Steuergeräts 100A direkt von dem ersten Steuergerät 100A zu empfangen und über eine oder mehrere erste Schnittstellen 131 des zweiten Steuergeräts 100B an die eine oder mehrere Beleuchtungseinrichtungen B1, B2, ... des zweiten Steuergeräts 100B und/oder über eine oder mehrere zweite Schnittstellen 132 des zweiten Steuergeräts 100B an den einen oder die mehreren Sensoren S1, S2, ... des zweiten Steuergeräts 100B und/oder über eine oder mehrere dritte Schnittstellen 133 des zweiten Steuergeräts 100B an die eine oder mehreren digitalen Beschilderungen D1, D2, ... des zweiten Steuergeräts 100B weiterzugeben sowie erfasste Daten und/oder Statusinformationen der einen oder mehreren Beleuchtungseinrichtungen B1, B2, ... des zweiten Steuergeräts 100A über einen oder mehrere erste Schnittstellen 131 des zweiten Steuergeräts 100B und/oder des einen oder der mehreren Sensoren S1, S2, ... des zweiten Steuergeräts 100B über eine oder mehrere zweite Schnittstellen 132 des zweiten Steuergeräts 100B und/oder der einen oder mehreren digitalen Beschilderungen D1, D2, ... des zweiten Steuergeräts 100B über eine oder mehrere dritte Schnittstellen 133 des zweiten Steuergeräts 100B einzulesen und über die Netzwerkschnittstelle 120B des zweiten Steuergeräts 100B und die Netzwerkschnittstelle 120A des ersten Steuergeräts 100A direkt an das erste Steuergerät 100A zu übertragen.

Das dritte Steuergerät 100C ist eingerichtet, Steuerbefehle für eine oder mehrere Beleuchtungseinrichtungen B1, B2, ... und/oder eine oder mehrere Sensoren S1, S2, ... und/oder eine oder mehrere digitale Beschilderungen D1, D2, ... des dritten Steuergeräts 100C über die Netzwerkschnittstelle 120C des dritten Steuergeräts 100C und die Netzwerkschnittstelle 120A des ersten Steuergeräts 100A direkt von dem ersten Steuergerät 100A zu empfangen und über eine oder mehrere erste Schnittstellen 131 des dritten Steuergeräts 100C an die eine oder mehrere Beleuchtungseinrichtungen B1, B2, ... des dritten Steuergeräts 100C und/oder über eine oder mehrere zweite Schnittstellen 132 des dritten Steuergeräts 100C an den einen oder die mehreren Sensoren S1, S2, ... des dritten Steuergeräts 100C und/oder über eine oder mehrere dritte Schnittstellen 133 des dritten Steuergeräts 100C an die eine oder mehreren digitalen Beschilderungen D1, D2, ... des dritten Steuergeräts 100C weiterzugeben sowie erfasste Daten und/oder Statusinformationen der einen oder mehreren Beleuchtungseinrichtungen B1, B2, ... des dritten Steuergeräts 100C über einen oder mehrere erste Schnittstellen 131 des dritten Steuergeräts 100C und/oder des einen oder der mehreren Sensoren S1, S2, ... des dritten Steuergeräts 100C über eine oder mehrere zweite Schnittstellen 132 des dritten Steuergeräts 100C und/oder der einen oder mehreren digitalen Beschilderungen D1, D2, ... des dritten Steuergeräts 100C über eine oder mehrere dritte Schnittstellen 133 des dritten Steuergeräts 100C einzulesen und über die Netzwerkschnittstelle 120C des dritten Steuergeräts 100C und die Netzwerkschnittstelle 120A des ersten Steuergeräts 100A direkt an das erste Steuergerät 100A zu übertragen.

Das vierte Steuergerät 100D ist eingerichtet, Steuerbefehle für eine oder mehrere Beleuchtungseinrichtungen B1, B2, ... und/oder eine oder mehrere Sensoren S1, S2, ... und/oder eine oder mehrere digitale Beschilderungen D1, D2, ... des vierten Steuergeräts 100D über die Netzwerkschnittstelle 120D des vierten Steuergeräts 100D und die Netzwerkschnittstelle 120A des ersten Steuergeräts 100A direkt von dem ersten Steuergerät 100A zu empfangen und über eine oder mehrere erste Schnittstellen 131 des vierten Steuergeräts 100D an die eine oder mehrere Beleuchtungseinrichtungen B1, B2, ... des vierten Steuergeräts 100D und/oder über eine oder mehrere zweite Schnittstellen 132 des vierten Steuergeräts 100D an den einen oder die mehreren Sensoren S1, S2, ... des vierten Steuergeräts 100D und/oder über eine oder mehrere dritte Schnittstellen 133 des vierten Steuergeräts 100D an die eine oder mehreren digitalen Beschilderungen D1, D2, ... des vierten Steuergeräts 100D weiterzugeben sowie erfasste Daten und/oder Statusinformationen der einen oder mehreren Beleuchtungseinrichtungen B1, B2, ... des vierten Steuergeräts 100D über eine oder mehrere erste Schnittstellen 131 des vierten Steuergeräts 100D und/oder des einen oder der mehreren Sensoren S1, S2, ... des vierten Steuergeräts 100D über ein oder mehrere zweite Schnittstellen 132 des vierten Steuergeräts 100D und/oder der einen oder mehreren digitalen Beschilderungen D1, D2, ... des vierten Steuergeräts 100D über eine oder mehrere dritte Schnittstellen 133 des vierten Steuergeräts 100D einzulesen und über die Netzwerkschnittstelle 120D des vierten Steuergeräts 100D und die Netzwerkschnittstelle 120A des ersten Steuergeräts 100A direkt an das erste Steuergerät 100A zu übertragen.

Das fünfte Steuergerät 100E ist eingerichtet, Steuerbefehle für eine oder mehrere Beleuchtungseinrichtungen B1, B2, ... und/oder eine oder mehrere Sensoren S1, S2, ... und/oder eine oder mehrere digitale Beschilderungen D1, D2, ... des fünften Steuergeräts 100E über die Netzwerkschnittstelle 120E des fünften Steuergeräts 100E und die Netzwerkschnittstelle 120A des ersten Steuergeräts 100A direkt von dem ersten Steuergerät 100A zu empfangen und über eine oder mehrere erste Schnittstellen 131 des fünften Steuergeräts 100E an die eine oder mehrere Beleuchtungseinrichtungen B1, B2, ... des fünften Steuergeräts 100E und/oder über eine oder mehrere zweite Schnittstellen 132 des fünften Steuergeräts 100E an den einen oder die mehreren Sensoren S1, S2, ... des fünften Steuergeräts 100E und/oder über eine oder mehrere dritte Schnittstellen 133 des fünften Steuergeräts 100E an die eine oder mehreren digitalen Beschilderungen D1, D2, ... des fünften Steuergeräts 100E weiterzugeben sowie erfasste Daten und/oder Statusinformationen der einen oder mehreren Beleuchtungseinrichtungen B1, B2, ... des fünften Steuergeräts 100E über eine oder mehrere erste Schnittstellen 131 des fünften Steuergeräts 100E und/oder des einen oder der mehreren Sensoren S1, S2, ... des fünften Steuergeräts 100E über ein oder mehrere zweite Schnittstellen 132 des fünften Steuergeräts 100E und/oder der einen oder mehreren digitalen Beschilderungen D1, D2, ... des fünften Steuergeräts 100E über eine oder mehrere dritte Schnittstellen 133 des fünften Steuergeräts 100E einzulesen und über die Netzwerkschnittstelle 120E des fünften Steuergeräts 100E und die Netzwerkschnittstelle 120A des ersten Steuergeräts 100A direkt an das erste Steuergerät 100A zu übertragen.

Vorzugsweise weist das Verkaufsregalsystem 50 des Weiteren wenigstens ein mobiles Endgerät 52 auf, wobei das wenigstens eine mobile Endgerät 52 mit dem Server 51 signalübertragend verbindbar oder verbunden ist, um Steuerbefehle für eine oder mehrere Beleuchtungseinrichtungen B1, B2, ... und/oder eine oder mehrere Sensoren S1, S2, ... und/oder eine oder mehrere digitale Beschilderungen D1, D2, ... des ersten Steuergeräts 100A und/oder des zweiten Steuergeräts 100B und/oder des dritten Steuergeräts 100C und/oder des vierten Steuergeräts 100D und/oder des fünften Steuergeräts 100E an den Server 51 zu übertragen und/oder um erfasste Daten und/oder Statusinformationen der einen oder mehreren Beleuchtungseinrichtungen B1, B2, ... und/oder des einen oder der mehreren Sensoren S1, S2, ... und/oder der einen oder mehreren digitale Beschilderungen D1, D2, ... des ersten Steuergeräts 100A und/oder des zweiten Steuergeräts 100B und/oder des dritten Steuergeräts 100C und/oder des vierten Steuergeräts 100D und/oder des fünften Steuergeräts 100E von dem Server 51 zu empfangen.

Vorzugsweise wird an das mobile Endgerät 52 eine Warnnachricht ausgegeben, wenn wenigstens ein Sensor S einen kritischen Wert detektiert. Dies kann die Detektion eines Über- oder Unterschreitens eines Soll-Gewichts durch einen Gewichtssensor und/oder die Detektion eines Überschreitens einer Soll-Neigung durch einen Neigungssensor und/oder die Detektion eines Über- oder Unterschreitens einer Soll-Temperatur durch einen Temperatursensor und/oder die Detektion eines Über- oder Unterschreitens eines Soll-Feuchtigkeitswerts durch einen Feuchtigkeitssensor und/oder die Detektion einer Abwesenheit einer bestimmten Ware durch einen optischen Sensor sein. Durch die auf dem mobilen Endgerät 52 ausgegebene Warnnachricht kann ein Nutzer des mobilen Endgeräts 52 direkt informiert werden, dass entsprechende Instandhaltungsmaßnahmen an einem Verkaufsregal 10 oder an einem Warenträger 13 eines Verkaufsregals 10 durchzuführen sind.

Es wird darauf hingewiesen, dass es sich bei Ausführungsbeispielen lediglich um Beispiele handelt, die den Schutzbereich, die Anwendung und den Aufbau in keiner Weise einschränken sollen. Vielmehr wird dem Fachmann durch die vorausgehende Beschreibung ein Leitfaden für die Umsetzung mindestens eines Ausführungsbeispiels gegeben, wobei diverse Änderungen, insbesondere im Hinblick auf die Funktion und Anordnung der beschriebenen Bestandteile, vorgenommen werden können, ohne den Schutzbereich zu verlassen, wie es sich aus den Ansprüchen und diesen äquivalenten Merkmalskombinationen ergibt.

### Bezugszeichenliste:

- 10: Verkaufsregal
- 11: Netzteil
- 12: Regalsteher
- 13: Warenträger
- 14: Befestigungsmechanismus
- 15: Stromversorgung
- 16: elektrischer Abnehmer
- 17: elektrische Steckverbindung
- 18: Bodenfach
- 19: WLAN-Router
- 50: Verkaufsregalsystem
- 51: Server
- 52: mobiles Endgerät
- 100: Steuergerät
- 110: Stromversorgungsanschluss
- 120: Netzwerkschnittstelle
- 131: erste Schnittstelle
- 132: zweite Schnittstelle
- 133: dritte Schnittstelle
- 134: vierte Schnittstelle
- 135: Open-Schnittstelle
- 140: Spannungswandler
- 150: A/D-Wandler
- B: Beleuchtungseinrichtung
- D: digitale Beschilderung
- P: digitale Preisschilder
- S: Sensor

## Patentansprüche

1. Verkaufsregal (10) mit einem Steuergerät (100), wobei das Verkaufsregal (10) das Steuergerät (100) lagert und wobei das Steuergerät (100) aufweist:
einen Stromversorgungsanschluss (110);
eine Netzwerkschnittstelle (120);
wenigstens eine erste Schnittstelle (131), eingerichtet zur Ansteuerung und elektrischen Versorgung einer Beleuchtungseinrichtung (B), und wenigstens eine zweite Schnittstelle (132), eingerichtet zur Ansteuerung und elektrischen Versorgung eines Sensors (S); und
einen Spannungswandler (140), welcher eingerichtet ist, eine Eingangsspannung, welche über ein Netzteil (11) an dem Stromversorgungsanschluss (110) anliegt, in Versorgungsspannungen für die wenigstens eine erste Schnittstelle (131) und die wenigstens eine zweite Schnittstelle (132) zu wandeln;
wobei das Steuergerät (100) eingerichtet ist, Steuerbefehle für eine Beleuchtungseinrichtung (B) und einen Sensor (S) über die Netzwerkschnittstelle (120) von einem Server (51) zu empfangen und die Beleuchtungseinrichtung (B) über die wenigstens eine erste Schnittstelle (131) und den Sensor (S) über die wenigstens eine zweite Schnittstelle (132) entsprechend anzusteuern sowie erfasste Daten und/oder Statusinformationen der Beleuchtungseinrichtung (B) über die wenigstens eine erste Schnittstelle (131) und des Sensors (S) über die wenigstens eine zweite Schnittstelle (132) einzulesen und über die Netzwerkschnittstelle (120) an den Server (51) zu übertragen.

2. Verkaufsregal (10) gemäß Anspruch 1, wobei das Steuergerät (100) des Weiteren aufweist:
wenigstens eine dritte Schnittstelle (133), eingerichtet zur Ansteuerung und elektrischen Versorgung einer digitalen Beschilderung (D),
wobei der Spannungswandler (140) des Weiteren eingerichtet ist, eine Eingangsspannung, welche über ein Netzteil (11) an dem Steuergerät (100) anliegt, in eine Versorgungsspannung für die wenigstens eine dritte Schnittstelle (133) zu wandeln, und
wobei das Steuergerät (100) des Weiteren eingerichtet ist, Steuerbefehle für eine digitale Beschilderung (D) über die Netzwerkschnittstelle (120) von einem Server (51) zu empfangen und die digitale Beschilderung (D) über die wenigstens eine dritte Schnittstelle (133) entsprechend anzusteuern sowie erfasste Daten und/oder Statusinformationen der digitalen Beschilderung (D) über die wenigstens eine dritte Schnittstelle (133) einzulesen und über die Netzwerkschnittstelle (120) an den Server (51) zu übertragen.

3. Verkaufsregal (10) gemäß Anspruch 1, wobei das Steuergerät (100) des Weiteren aufweist:
wenigstens eine vierte Schnittstelle (134), eingerichtet zur elektrischen Versorgung digitaler Preisschilder (P), insbesondere über eine Stromschiene, auf welcher die digitalen Preisschilder (P) montiert sind,
wobei der Spannungswandler (140) des Weiteren eingerichtet ist, eine Eingangsspannung, welche über ein Netzteil (11) an dem Steuergerät (100) anliegt, in eine Versorgungsspannung für die wenigstens eine vierte Schnittstelle (134) zu wandeln.

4. Verkaufsregal (10) gemäß Anspruch 1, wobei das Steuergerät (100) des Weiteren aufweist:
wenigstens eine Open-Schnittstelle (135), welche programmierbar ist,
wobei der Spannungswandler (140) des Weiteren eingerichtet ist, eine Eingangsspannung, welche über ein Netzteil (11) an dem Steuergerät (100) anliegt, in eine Versorgungsspannung für die wenigstens eine Open-Schnittstelle (135) zu wandeln.

5. Verkaufsregal (10) gemäß einem der vorhergehenden Ansprüche, wobei der Spannungswandler (140) bei einer Eingangsspannung von 24V eingerichtet ist, Versorgungsspannungen von 24V, 12V, 9V und 5V bereitzustellen.

6. Verkaufsregal (10) gemäß einem der vorhergehenden Ansprüche, wobei die wenigstens eine zweite Schnittstelle (132), eingerichtet ist zur Ansteuerung und elektrischen Versorgung eines Sensors (S) aus der nachfolgenden Gruppe an Sensoren (S): Gewichtssensor, insbesondere eine Wiegezelle, Neigungssensor, Temperatursensor, Feuchtigkeitssensor, oder optischen Sensor, insbesondere eine Kamera.

7. Verkaufsregal (10) gemäß einem der vorhergehenden Ansprüche, wobei das Steuergerät (100) des Weiteren einen A/D-Wandler (150) aufweist, um analoge Messsignale wenigstens eines Sensors (S), insbesondere eines Gewichtssensors, in digitale Messsignale wandeln zu können.

8. Verkaufsregal (10) gemäß einem der vorhergehenden Ansprüche, wobei das Steuergerät (100) lösbar, insbesondere magnetisch, an dem Verkaufsregal (10) angebracht, insbesondere befestigt, ist.

9. Verkaufsregal (10) gemäß einem der vorhergehenden Ansprüche, des Weiteren aufweisend:
einen Regalsteher (12);
wenigstens einen Warenträger (13);
einen Befestigungsmechanismus (14), welcher dazu eingerichtet ist, den wenigstens einen Warenträger (13) an dem Regalsteher (12) zu befestigen,
wobei das Steuergerät (100) an der Unterseite des wenigstens einen Warenträgers (13) angebracht, insbesondere befestigt, ist.

10. Verkaufsregal (10) gemäß Anspruch 9, wobei in den Regalsteher (12) eine Stromversorgung (15) integriert ist und wobei der wenigstens eine Warenträger (13) einen elektrischen Abnehmer (16) aufweist, welcher in dem Befestigungsmechanismus (14) integriert ist und eingerichtet ist, das Steuergerät (100) mit Energie zu versorgen, wenn der wenigstens eine Warenträger (13) über den Befestigungsmechanismus (14) an dem Regalsteher (12) befestigt ist, und wobei der Stromversorgungsanschluss (110) zur elektrischen Verbindung mit dem elektrischen Abnehmer (16) vorzugsweise eine elektrische Steckverbindung (17) aufweist.

11. Verkaufsregal (10) gemäß einem der vorhergehenden Ansprüche, des Weiteren aufweisend:
ein Netzteil (11), welches eingerichtet ist, eine Eingangsspannung aus einem Spannungsnetz, insbesondere einem Niederspannungsnetz, welche am Netzteil (11) anliegt, in eine Versorgungsspannung für das Steuergerät (100) zu wandeln und an einer Stromversorgung (15) bereitzustellen, wobei das Netzteil (11) vorzugsweise in einem Bodenfach (18) des Verkaufsregals (10) angeordnet ist.

12. Verkaufsregal (10) gemäß einem der vorhergehenden Ansprüche, des Weiteren aufweisend:
einen WLAN-Router (19), wobei das Steuergerät (100) über die Netzwerkschnittstelle (120) mit dem WLAN-Router (19) signalübertragend verbindbar oder verbunden ist, wobei der WLAN-Router (19) mit dem Server (51) signalübertragend verbindbar oder verbunden ist und wobei der WLAN-Router (19) eingerichtet ist, Steuerbefehle für eine Beleuchtungseinrichtung (B) und/oder einen Sensor (S) und /oder eine digitale Beschilderung (D) von einem Server (51) zu empfangen und über die Netzwerkschnittstelle (120) an das Steuergerät (100) weiterzugeben sowie erfasste Daten und/oder Statusinformationen der Beleuchtungseinrichtung (B) und/oder des Sensors (S) und/oder der digitalen Beschilderung (D) über die Netzwerkschnittstelle (120) des Steuergerätes (100) zu empfangen und an den Server (51) zu übertragen;
wobei der WLAN-Router (19) vorzugsweise in einem Bodenfach (18) des Verkaufsregals (10) angeordnet ist.

13. Verkaufsregalsystem (50), aufweisend:
einen Server (51); und
wenigstens ein Verkaufsregal (10) gemäß einem der vorhergehenden Ansprüche.

14. Verkaufsregalsystem (50) gemäß Anspruch 13, wobei ein erstes Steuergerät (100A) des Verkaufsregalsystems (50) die übrigen Steuergeräte (100B, ...) des Verkaufsregalsystems (50) in einer Master/Slave-Architektur steuert.

15. Verkaufsregalsystem (50) gemäß Anspruch 13 oder 14, des Weiteren wenigstens ein mobiles Endgerät (52) aufweisend, wobei das wenigstens eine mobile Endgerät (52) mit dem Server (51) signalübertragend verbindbar oder verbunden ist, um Steuerbefehle für Beleuchtungseinrichtungen (B) und/oder Sensoren (S) und/oder digitale Beschilderungen (D) der Steuergeräte (100A, 100B, ...) an den Server (51) zu übertragen und/oder um erfasste Daten und/oder Statusinformationen der Beleuchtungseinrichtungen (B) und/oder der Sensoren (S) und/oder der digitalen Beschilderungen (D) der Steuergeräte (100A, 100B, ...) von dem Server (51) zu empfangen.
